# EUROPÄISCHE PATENTANMELDUNG

(11) **EP 1 085 056 A2**
(43) Veröffentlichungstag der Anmeldung: **21.03.2001**
(21) Anmeldenummer: 00810806.0
(22) Anmeldetag: 07.09.2000
(51) Int. Cl.: C09B 29/095, C09B 29/033, C09B 29/03, C09B 50/00, C09B 1/20

(54) **Additionsprodukte von acryloylamino-substituierten Farbstoffen, deren Herstellung und deren Verwendung**

(30) Priorität: 16.09.1999 CH 170199
(71) Anmelder: Ciba Specialty Chemicals Holding Inc., 4057 Basel (CH)
(72) Erfinder: Lehmann, Urs, 4057 Basel (CH); Frick, Marcel, 4153 Reinach (CH)

(57) **Zusammenfassung**

Monoazo-, Polyazo-, Metallkomplexazo-, Anthrachinon-, Phthalocyanin-, Formazan- oder Dioxazin-Farbstoffe, die mindestens eine Struktureinheit der Formel (1) 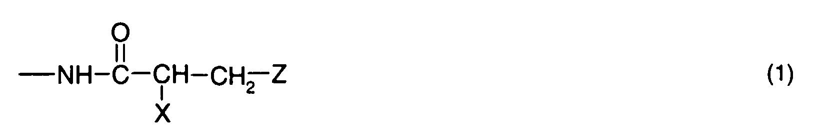 enthalten, worin
Z gegebenenfalls im Alkylteil substituiertes oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes oder durch Sauerstoff oder einen Rest - NR₁- unterbrochenes N-Mono- oder N,N-Di-C₁-C₂₄-Alkylamino, wobei R₁ Wasserstoff oder C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, Piperazin-1-yl oder Piperidin-1-yl ist, und
X Wasserstoff, Hydroxy, Chlor oder Brom bedeutet, oder X die Bedeutung von Z hat, ergeben Färbungen oder Drucke mit guten Lichtechtheiten und hoher Farbbrillanz.

## Beschreibung

Die vorliegende Erfindung betrifft neue Farbstoffe, die sich aus Reaktivfarbstoffen mit mindestens einem Acryloylaminorest durch Addition von bestimmten stickstoff-, sauerstoff- oder schwefelhaltigen nukleophilen Verbindungen erhalten lassen.

Die der vorliegenden Erfindung zugrundeliegenden Farbstoffe eignen sich insbesondere zum Bedrucken von textilen Fasermaterialien, Papier, Kunststoff- oder Aluminium-Folien, vorzugsweise nach dem Tintenstrahldruckverfahren, sowie zum Färben von textilen Fasermaterialien, Papier, Aluminium-Blechen oder Folien nach traditionellen Färbe- und Druckverfahren und ergeben Färbungen und Drucke mit guter Lichtechtheit und hoher Farbbrillanz.

Gegenstand der vorliegenden Erfindung sind somit
Monoazo-, Polyazo-, Metallkomplexazo-, Anthrachinon-, Phthalocyanin-, Formazan- oder Dioxazin-Farbstoffe, die mindestens eine Struktureinheit der Formel (1) 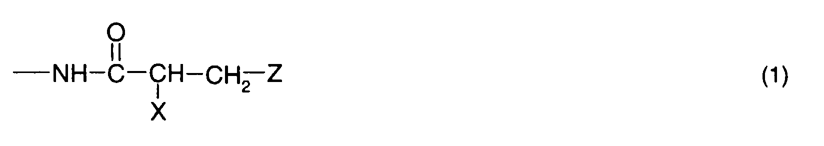 enthalten, worin
Z gegebenenfalls im Alkylteil substituiertes oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes oder durch Sauerstoff oder einen Rest -NR₁- unterbrochenes N-Mono- oder N,N-Di-C₁-C₂₄-Alkylamino, wobei R₁ Wasserstoff oder C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, Piperazin-1-yl oder Piperidin-1-yl ist, und
X Wasserstoff, Hydroxy, Chlor oder Brom bedeutet, oder X die Bedeutung von Z hat.

Z als C₁-C₂₄-Alkoxy, vorzugsweise C₁-C₁₂-Alkoxy und insbesondere C₁-C₄-Alkoxy, bedeutet beispielsweise Methoxy, Ethoxy, Propoxy, Isopropoxy, n-Butoxy, sek.-Butoxy, Isobutoxy oder tert.-Butoxy. Die genannten Reste sind unsubstituiert oder im Alkylteil substituiert, z.B. durch C₁-C₄-Alkoxy, wie beispielsweise Methoxy oder Ethoxy; Hydroxy; Sulfo; Sulfato oder Carboxy. Im Alkylteil durch Sauerstoff unterbrochene und gegebenenfalls weitersubstituierte Reste sind beispielsweise Polyalkylenoxide mit 4 bis 24 Kohlenstoffatomen, wie z.B. Polyethylenoxid der Formel -(O-CH₂-CH₂)₂₋₁₂-OH, Polypropylenoxyd der Formel 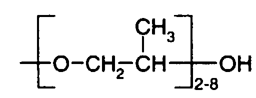 und gemischtes Polyethylenoxid/Polypropylenoxid. Die Hydroxygruppe der genannten Polyalkylenoxidreste kann beispielsweise durch C₁-C₄-Alkyl, wie z.B. Methyl oder Ethyl, verethert sein.

Z als C₁-C₄-Alkylthio bedeutet beispielsweise Methylthio, Ethylthio, Propylthio, Isopropylthio oder n-Butylthio. Die genannten Reste sind unsubstituiert oder im Alkylteil substituiert, z.B. durch C₁-C₄-Alkoxy, wie beispielsweise Methoxy oder Ethoxy; Hydroxy; Sulfo oder Carboxy. Bevorzugt sind die durch einen oder zwei Reste aus der Gruppe Hydroxy, Sulfo oder Carboxy substituierten Reste.

Z als Phenyloxy oder Phenylthio kann sowohl die unsubstituierten wie auch die im Phenylring z.B. durch C₁-C₄-Alkyl, wie beispielsweise Methyl oder Ethyl, welches gegebenenfalls z.B. durch Carboxy weitersubstituiert ist; C₁-C₄-Alkoxy, wie beispielsweise Methoxy oder Ethoxy; Carboxy; C₁-C₄-Alkanoylamino, wie beispielsweise Acetylamino oder Propionylamino; Carbamoyl; N-C₁-C₄-Alkylcarbamoyl, welches gegebenenfalls im Alkylteil z.B. durch Carboxy weitersubstituiert ist, wie beispielsweise N-Carboxymethylcarbamoyl; Sulfamoyl; N-C₁-C₄-Alkylsulfamoyl; Sulfo oder Halogen, wie beispielsweise Chlor oder Brom; substituierten Reste umfassen. Bevorzugt sind die substituierten Reste, vorzugsweise die durch Carboxy, Carboxymethyl, N-Carboxymethylcarbamoyl oder Sulfo, insbesondere Carboxy oder Sulfo, substituierten Reste.

Z als N-Mono- oder N,N-Di-C₁-C₂₄-Alkylamino bedeutet beispielsweise Methylamino, Ethylamino, N,N-Di-Methylamino, N,N-Di-Ethylamino, Isopropylamino, n-Butylamino, sek.-Butylamino, Isobutylamino oder tert.-Butylamino, lineares oder verzweigtes Pentylamino, Hexylamino, Heptylamino, Octylamino, Nonylamino, Decylamino, Undecylamino, Dodecylamino, Tridecylamino oder Tetradecylamino. Die genannten Reste sind unsubstituiert oder im Alkylteil substituiert, z.B. durch Phenyl, welches seinerseits durch Carboxy, Carbamoyl, Sulfo oder Sulfamoyl substituiert sein kann; Amino; C₂-C₄-Alkanoylamino, wie beispielsweise Acetylamino oder Propionylamino; C₁-C₄-Alkoxy, wie beispielsweise Methoxy oder Ethoxy; Hydroxy; Sulfo; Sulfato; Carboxy; Carbamoyl oder Sulfamoyl. Die genannten Reste sind gegebenenfalls im Alkylteil durch Sauerstoff oder -NR₁- unterbrochen, wobei R₁ Wasserstoff oder z.B. Methyl oder Ethyl, vorzugsweise Wasserstoff, bedeutet.
Beispielhaft für die im Alkylteil substituierten und/oder die durch Sauerstoff oder -NH- im Alkylteil unterbrochenen Reste seien die folgenden Reste genannt:
N-β-Aminoethylamino, N-β-Aminopropylamino, N-β-Hydroxyethylamino, N,N-Di-β-Hydroxyethylamino, N-2-(β-Hydroxyethoxy)ethylamino, N-2-[2-(β-Hydroxyethoxy)ethoxy]ethylamino, N-2-(β-Hydroxyethylamino)ethylamino, N-2-(β-Aminoethylamino)ethylamino, Polyethylenimine der Formel -(NH-CH₂-CH₂)₃-NH₂, -(NH-CH₂-CH₂)₄-NH₂, N-β-Sulfatoethylamino, N-β-Sulfoethylamino, N-Carboxymethylamino, N-β-Carboxyethylamino, N-α,β-Dicarboxyethylamino, N-α,γ-Dicarboxypropylamino, N-Ethyl-N-β-Hydroxyethylamino und N-Methyl-N-β-Hydroxy-ethylamino.
Geeignete unsubstituierte und ununterbrochene, im Alkylteil verzweigte Reste entsprechen z.B. der Formel 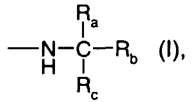 wobei die Summe der Kohlenstoffatome Rₐ + R_{b} + R_{c} 11 bis 14 beträgt. Beispielhaft für die dem Rest der vorbezeichneten Formel zugrundeliegenden Amine sei ®Primene 81 R (Rohm & Haas) genannt.

Z als N-Mono- oder N,N-Di-C₁-C₂₄-Alkylamino, welches im Alkylteil substituiert und/oder durch Sauerstoff oder -NR₁- unterbrochen ist, wobei R₁ die oben angegebene Bedeutung und Bevorzugung hat, ist vorzugsweise N-Mono- oder N,N-Di-C₁-C₆-Alkylamino und insbesondere N-Mono- oder N,N-Di-C₁-C₄-Alkylamino.

Bevorzugt für Z als N-Mono- oder N,N-Di-C₁-C₂₄-Alkylamino sind die im Alkylteil durch Phenyl, Amino, Hydroxy, Sulfo, Sulfato, Carboxy oder Carbamoyl, insbesondere durch Phenyl, Amino, Sulfo, Sulfato, Carboxy oder Carbamoyl, substituierten und gegebenenfalls durch -NH- unterbrochenen Reste.

Z als C₁₀-C₂₀-Terpenamino, vorzugsweise C₂₀-Diterpenamino, ist eine am Stickstoff durch einen Terpenkohlenwasserstoffrest monosubstituierte Aminogruppe. Als Terpenkohlenwasserstoffrest kommen z.B. acyclische-, monocyclische- oder bicyclische C₁₀-Terpene, acyclische-, monocyclische-, bicyclische- oder tricyclische C₁₅-Sesquiterpene, acyclische-, monocyclische- oder tricyclische C₂₀-Diterpene, insbesondere tricyclische C₂₀-Diterpene und ganz besonders dehydrierte tricyclische C₂₀-Diterpene, etwa solche, die sich von der Dehydroabietinsäure ableiten. Beispielhaft für einen solchen dehydrierten tricyclischen C₂₀-Diterpenaminorest, sei der Rest der Formel 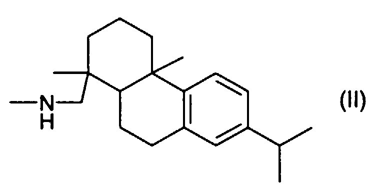 genannt.

Z als C₅-C₇-Cycloalkylamino kann sowohl die unsubstituierten wie auch die im Cycloalkylring z.B. durch C₁-C₄-Alkyl, wie beispielsweise Methyl oder Ethyl, insbesondere Methyl, oder Carboxyl substituierten Reste umfassen. Bevorzugt als solche Reste sind die entsprechenden Cyclohexylreste.

Z als Phenylamino oder N-C₁-C₄-Alkyl-N-phenylamino, vorzugsweise Phenylamino, kann sowohl die unsubstituierten wie auch die im Phenylring z.B. durch C₁-C₄-Alkyl, wie beispielsweise Methyl oder Ethyl, welches gegebenenfalls z.B. durch Carboxy weitersubstituiert ist; C₁-C₄-Alkoxy, wie beispielsweise Methoxy oder Ethoxy; Carboxy; Carbamoyl; N-C₁-C₄-Alkylcarbamoyl, welches gegebenenfalls im Alkylteil z.B. durch Carboxy weitersubstituiert ist, wie beispielsweise N-Carboxymethylcarbamoyl; Sulfo oder Halogen, wie beispielsweise Chlor oder Brom; substituierten Reste umfassen. Bevorzugt sind die substituierten Reste, vorzugsweise die durch Carboxy, Carboxymethyl, N-Carboxymethylcarbamoyl oder Sulfo, insbesondere Sulfo substituierten Reste.

Z als Naphthylamino oder N-C₁-C₄-Alkyl-N-naphthylamino, vorzugsweise Naphthylamino, kann sowohl die unsubstituierten wie auch die im Naphthylring z.B. durch Sulfo substituierten Reste umfassen. Bevorzugt sind die durch 1 bis 3, insbesondere 2 bis 3, Sulfogruppen substituierten Reste.

Bevorzugt sind die erfindungsgemässen Farbstoffe, worin
Z gegebenenfalls im Alkylteil durch Hydroxy, Sulfo oder Carboxy substituiertes oder durch ein, zwei oder drei Sauerstoffatome unterbrochenes C₁-C₁₂-Alkoxy, gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes oder durch ein, zwei oder drei Sauerstoffatome oder -NH- Gruppen unterbrochenes N-Mono- oder N,N-Di-C₁-C₁₄-Alkylamino, C₂₀-Diterpenamino, gegebenenfalls durch C₁-C₄-Alkyl oder Carboxyl substituiertes C₅-C₇-Cycloalkylamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, Piperazin-1-yl oder Piperidin-1-yl bedeutet.

Besonders bevorzugt sind die erfindungsgemässen Farbstoffe, worin
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes oder durch ein, zwei oder drei -NH- Gruppen unterbrochenes N-Mono- oder N,N-Di-C₁-C₁₄-Alkylamino, C₂₀-Diterpenamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, Piperazin-1-yl oder Piperidin-1-yl bedeutet.

Ganz besonders bevorzugt sind die erfindungsgemässen Farbstoffe, worin
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet.

Bevorzugt sind die erfindungsgemässen Farbstoffe, worin
X Hydroxy, Chlor oder Brom, oder X die oben angegebene Bedeutung von Z hat.

Besonders bevorzugt sind die erfindungsgemässen Farbstoffe, worin
X Brom, oder X die oben angegebene Bedeutung von Z hat.

Ganz besonders bevorzugt sind die erfindungsgemässen Farbstoffe, worin
X Brom bedeutet.

Für X in der Bedeutung von Z gelten jeweils die für Z angegebenen Bevorzugungen.

In einer interessanten Ausführungsform der erfindungsgemässen Farbstoffe bedeutet Z C₁₀-C₂₀-Terpenamino, vorzugsweise C₂₀-Diterpenamino, oder im Alkylteil unsubstituiertes und ununterbrochenes N-Mono- oder N,N-Di-C₁-C₂₄-Alkylamino, vorzugsweise N-Mono- oder N,N-Di-C₄-C₂₀-Alkylamino und insbesondere N-Mono-C₈-C₁₆-Alkylamino, welches geradkettig oder verzweigt sein kann, z.B. Z als Rest der oben genannten Formel (I) oder (II). Solche Farbstoffe eignen sich beispielsweise zur Herstellung von wasserfreien Tinten zum Bedrucken insbesondere von Aluminium-Blechen oder Folien.

Bevorzugt enthalten die erfindungsgemässen Farbstoffe mindestens eine Sulfogruppe.

Die Sulfogruppen in den erfindungsgemässen Farbstoffen liegen entweder in Form der freien Sulfosäure oder vorzugsweise als deren Salz, z.B. als Natrium-, Lithium-, Kalium-, Ammoniumsalz oder als Salz eines organischen Amins, z.B. als Triethanolammoniumsalz, vor.

Die erfindungsgemässen Farbstoffe können als farbgebenden Molekülteil (Chromophor) einen oder mehrere Reste aus der Gruppe Monoazo-, Polyazo-, Metallkomplexazo-, Stilben-, Anthrachinon-, Phthalocyanin-, Formazan- oder Dioxazin-Chromophor enthalten. Geeignete Reste aus der Gruppe der genannten Chromophore sind beispielsweise in der US-A-5 684 138, US-A-5 717 078, US-A-5 837 827 und US-A-5 989 297 angegeben.

Enthalten die erfindungsgemässen Farbstoffe mehr als einen Chromphor, beispielsweise zwei Chromophore, so sind diese durch ein Brückenglied miteinander verbunden. Als Brückenglied kommen die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Das Brückenglied enthält in der Regel mindestens zwei funktionelle Gruppen, z.B. die Carbonyl-, Sulfonyl, Carbonylamino-, Sulfonylamino- oder die Aminogruppe, wobei die Aminogruppe durch gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 10 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Der Ausdruck aliphatischer Rest schliesst auch cycloaliphatische Reste ein. Als aromatischer Rest kommt z.B. ein Naphthylenrest, der Rest eines Diphenyls oder Stilbens oder insbesondere ein Phenylenrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Triazinrest in Betracht, wobei der Triazinrest einen abspaltbaren Substituenten, wie z.B. Fluor oder Chlor, enthalten kann. Solche Farbstoffe sind beispielsweise in der US-A-5 750 662 und in den oben genannten Veröffentlichungen angegeben.

Bevorzugt enthalten die erfindungsgemässen Farbstoffe als farbgebenden Molekülteil einen Chromophor aus der oben genannten Gruppe und keine weiteren Chromophore.

Der Rest der Formel (1) und der Chromophor können durch ein Brückenglied miteinander verbunden sein. Als Brückenglied kommen neben der direkten Bindung die verschiedensten Reste in Betracht. Das Brückenglied ist z.B. ein aliphatischer, aromatischer oder heterocyclischer Rest; ferner kann das Brückenglied auch aus verschiedenen derartigen Resten zusammengesetzt sein. Ist das Brückenglied keine direkte Bindung, so enthält es in der Regel mindestens eine funktionelle Gruppe, z.B. die Carbonyl-, Sulfonyl-, Carbonylamino-, Sulfonylamino- oder die Aminogruppe, wobei die Aminogruppe durch gegebenenfalls durch Halogen, Hydroxy, Cyano, C₁-C₄-Alkoxy, C₁-C₄-Alkoxycarbonyl, Carboxy, Sulfamoyl, Sulfo oder Sulfato substituiertes C₁-C₄-Alkyl weitersubstituiert sein kann. Als aliphatischer Rest kommt z.B. ein Alkylenrest mit 1 bis 7 Kohlenstoffatomen oder dessen verzweigte Isomere in Betracht. Die Kohlenstoffkette des Alkylenrestes kann durch ein Heteroatom, wie z.B. ein Sauerstoffatom, unterbrochen sein. Als aromatischer Rest kommt z.B. ein Phenylenrest, der durch C₁-C₄-Alkyl, wie z.B. Methyl oder Aethyl, C₁-C₄-Alkoxy, wie z.B. Methoxy oder Aethoxy, Halogen, wie z.B. Fluor, Brom oder insbesondere Chlor, Carboxy oder Sulfo substituiert sein kann, und als heterocyclischer Rest z.B. ein Piperazin- oder ein Triazinrest in Betracht, wobei der Triazinrest einen abspaltbaren Substituenten, wie z.B. Fluor oder Chlor, enthalten kann.

Besonders bevorzugt sind Farbstoffe, dadurch gekennzeichnet, dass sie der Formel (2) 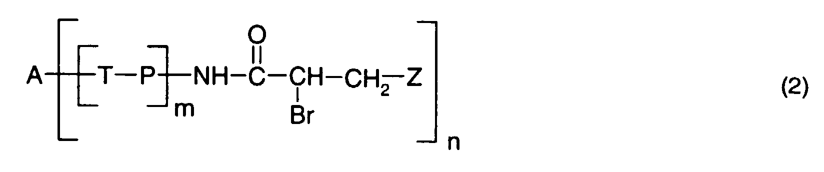 entsprechen, worin
A der Rest eines Monoazo-, Polyazo-, Metallkomplexazo-, Anthrachinon-, Phthalocyanin-, Formazan- oder Dioxazin-Chromophors bedeutet,
T ein Rest der Formel 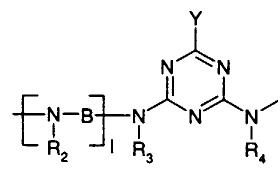 ist und
B ein verzweigter oder geradkettiger C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder
   ein gegebenenfalls durch C₁-C₄-Alkyl, C₁-C₄-Alkoxy, C₂-C₄-Alkanoylamino, Sulfo, Halogen oder Carboxy substituierter Phenylenrest ist,
R₂, R₃ und R₄ unabhängig voneinander Wasserstoff oder gegebenenfalls substituiertes C₁-C₄-Alkyl bedeuten,
Y Halogen, Hydroxy oder die oben für Z angegebene Bedeutung und Bevorzugung hat und l die Zahl 0 oder 1, vorzugsweise 0, ist
P ein gegebenenfalls durch C₁-C₄-Alkyl, C₁-C₄-Alkoxy, C₂-C₄-Alkanoylamino, Sulfo, Halogen oder Carboxy substituierter Phenylenrest ist,
Z die oben angegebene Bedeutung und Bevorzugung hat,
m die Zahl 0 oder 1 ist und
n die Zahl 1 oder 2, vorzugsweise 1, bedeutet.

Als C₁-C₄-Alkyl kommen für R₂, R₃ und R₄ unabhängig voneinander z.B. Methyl, Ethyl, Propyl, Isopropyl, n-Butyl, sek.-Butyl, tert.-Butyl oder Isobutyl, vorzugsweise Methyl oder Ethyl und insbesondere Methyl, in Betracht. Die angegebenen Reste sind unsubstituiert oder durch Halogen, Hydroxy, Cyano, C₁-C₄-Alkoxy, C₁-C₄-Alkoxycarbonyl, Carboxy, Sulfamoyl, Sulfo oder Sulfato substituiert. Bevorzugt sind die unsubstituierten Reste.

Als Halogen kommt für Y z.B. Fluor, Chlor oder Brom, vorzugsweise Fluor oder Chlor und insbesondere Chlor in Betracht.

Bevorzugt bedeuten R₂, R₃ und R₄ unabhängig voneinander Wasserstoff oder C₁-C₄-Alkyl und insbesondere Wasserstoff.

Bevorzugt ist B ein verzweigter oder geradkettiger C₂-C₁₂-Alkylenrest, insbesondere ein C₂-C₆-Alkylenrest, welcher durch 1, 2 oder 3 Glieder -O- unterbrochen sein kann und unsubstituiert oder durch Hydroxy oder Sulfato substituiert ist.

Bevorzugt ist P ein gegebenenfalls durch C₁-C₄-Alkyl, C₁-C₄-Alkoxy, Sulfo oder Halogen, vorzugsweise Sulfo, substituierter Phenylenrest.

Der Rest T ist vorzugsweise über B an den Rest A gebunden.

Bevorzugt sind die erfindungsgemässen Farbstoffe, worin
A der Rest eines Monoazo-, Polyazo-, Metallkomplexazo-, Anthrachinon- oder Formazan-Chromophors, insbesondere eines Monoazo-, Polyazo- oder Metallkomplexazo-Chromophors, bedeutet.

Besonders bevorzugt sind Farbstoffe, worin
A für den Rest der Formel (3) oder (4) 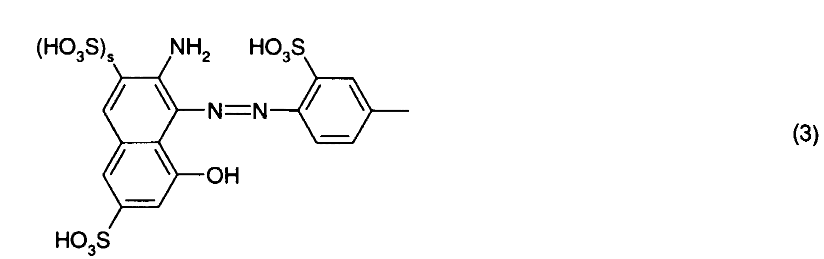 oder 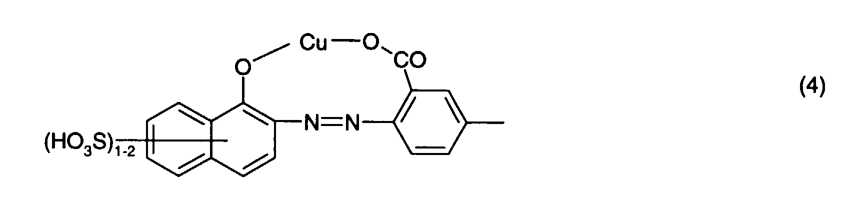 steht und s die Zahl 0 oder 1 ist.

Der Rest der Formel (4) ist vorzugsweise ein Rest der Formel (4a) 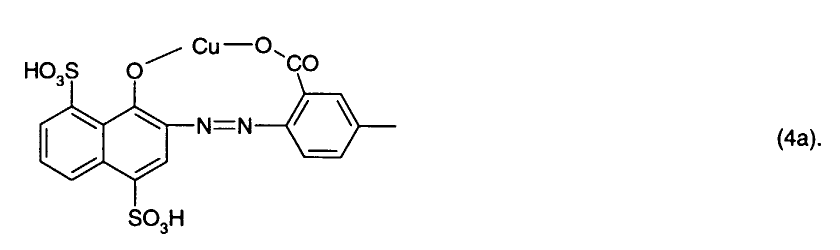 Bevorzugt sind Farbstoffe der Formel (2), worin
A ein Rest der Formel (3) oder (4), insbesondere (3) oder (4a), bedeutet, und s die Zahl 0 oder 1 ist,
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet,
P ein gegebenenfalls durch Sulfo substituierter Phenylenrest ist,
m für die Zahl 0 oder 1 steht,
n die Zahl 1 bedeutet,
T den oben angegebenen Rest bedeutet, worin
R₃ und R₄ Wasserstoff sind,
Y Halogen, Hydroxy oder die oben für Z angegebene Bedeutung hat, und l die Zahl 0 ist.

Besonders bevorzugt sind Farbstoffe der Formel (2), worin
A ein Rest der Formel (3) bedeutet,
s die Zahl 0 oder 1 ist,
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet,
P ein gegebenenfalls durch Sulfo substituierter Phenylenrest ist,
m für die Zahl 0 oder 1 steht,
n die Zahl 1 bedeutet,
T den oben angegebenen Rest bedeutet, worin
R₃ und R₄ Wasserstoff sind,
Y Halogen, Hydroxy oder die oben für Z angegebene Bedeutung hat, und l die Zahl 0 ist.

Besonders bevorzugt sind weiterhin Farbstoffe der Formel (2), worin
A für den Rest der Formel (4a) steht, und
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet,
m die Zahl 0 ist und
n die Zahl 1.

Gegenstand der vorliegenden Erfindung ist weiterhin ein Verfahren zur Herstellung der erfindungsgemässen Farbstoffe, die mindestens eine Struktureinheit der Formel (1) enthalten, dadurch gekennzeichnet, dass man
einen Monoazo-, Polyazo-, Metallkomplexazo-, Anthrachinon-, Phthalocyanin-, Formazan- oder Dioxazin-Farbstoff enthaltend mindestens eine Struktureinheit der Formel (5) 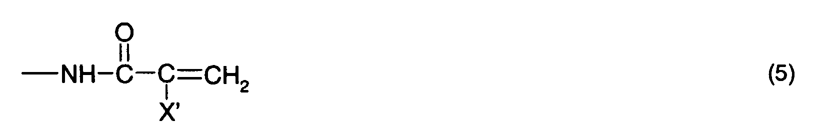 oder mindestens eine der Struktureinheit der Formel (5) entsprechenden Vorstufe mit einer Verbindung der Formel (6)

Z-H (6)

in mindestens einer den Struktureinheiten der Formel (5) oder deren Vorstufe im Farbstoffmolekül äquimolaren Menge umsetzt, wobei X' Wasserstoff, Chlor oder Brom, vorzugsweise Brom, ist und für Z die oben angegebene Bedeutung und Bevorzugung gilt.

Zweckmässigerweise verwendet man einen Überschuss der Verbindung der Formel (6) im Verhältnis zu den im Farbstoffmolekül enthaltenen Struktureinheiten der Formel (5) oder deren Vorstufe, beispielsweise einen 1,2- bis 20-molaren, vorzugsweise 1,5- bis 10-molaren, Überschuss.

Setzt man einen Farbstoff mit mindestens einer Struktureinheit der Formel (5) oder mindestens einer der Struktureinheit der Formel (5) entsprechenden Vorstufe, worin X' Chlor oder Brom, ist, mit einer Verbindung der Formel (6) in mindestens einem 2-molaren Überschuss um, so können die erfindungsgemässen Farbstoffe erhalten werden, in denen X die Bedeutung von Z hat.

Enthält der Farbstoff mit mindestens einer Struktureinheit der Formel (5) oder mindestens einer der Struktureinheit der Formel (5) entsprechenden Vorstufe Gruppen, die unter den Reaktionsbedingungen, wie z.B. Temperatur oder pH, labil sind, wie Halogen, z.B. Chlor oder Fluor, das an einen Triazinrest gebunden ist, so kann bei entsprechendem Überschuss der Verbindung der Formel (6) die labile Gruppe substituiert werden.

Das erfindungsgemässe Verfahren kann auch in der Weise durchgeführt werden, dass man ein Vorprodukt eines Monoazo-, Polyazo-, Metallkomplexazo-, Anthrachinon-, Phthalocyanin-, Formazan- oder Dioxazin-Farbstoffs enthaltend mindestens eine Struktureinheit der Formel (5) oder mindestens eine der Struktureinheit der Formel (5) entsprechenden Vorstufe, z.B. eine Kupplungskomponente, mit einer Verbindung der Formel (6) umsetzt und dann den Chromophor im weiteren Verlauf der Reaktion, z.B. durch Kupplungsreaktion mit einem diazotierten Amin zum Monoazo- oder Polyazochromophor, fertigstellt. Das erfindungsgemässe Verfahren schliesst diese Reaktionsvariante mit ein.

Die Reaktion wird zweckmässigerweise in Gegenwart einer Base, z.B. einem Alkalihydroxid, Alkalialkoholat oder Benzyltrimethylammoniumhydroxid, vorzugsweise einem Alkalihydroxid, z.B. Natriumhydroxid oder Kaliumhydroxid, oder einer Säure, z.B. Schwefelsäure, Eisessig oder Bortrifluorid, vorzugsweise einer Base, durchgeführt.

Ammoniak und aliphatische Amine sind hinreichend basisch, um unter milden Bedingungen, teilweise auch ohne die Gegenwart einer Base oder Säure, addiert zu werden. Bei aromatischen Aminen müssen dagegen höhere Temperaturen, z.B. Temperaturen über 100°C, angewendet werden. Die Reaktionsbedingungen richten sich dabei nach der Nukleophilie der Verbindung der Formel (6) und der Elektrophilie des Restes der Formel (5). Die Umsetzung wird zweckmässigerweise bei Temperaturen von 10 bis 120°C, vorzugsweise 15 bis 100°C und insbesondere 20 bis 75°C, durchgeführt. Diese Abhängigkeiten sind allgemein bekannt und in der Literatur hinreichend beschrieben.

Die Verbindung der Formel (6) ist bekannt oder kann nach an sich bekannten Verfahren hergestellt werden.

Farbstoffe mit mindestens einer Struktureinheit der Formel (5) oder mindestens einer der Struktureinheit der Formel (5) entsprechenden Vorstufe, z.B. α,β-di-chlor- oder α,β-di-brompropionylamino, sind bekannt und beschrieben, beispielsweise in der US-A-3 296 284, US-A-3 316 239, US-A-3 558 592, US-A-3 755 290, US-A-3 891 618, US-A-3 923 778, US-A- 4 855 410, US-A-4 885 360, US-A-4 917 705, US-A-5 480 976, US-A-5 523 397, US-A-5 554 733, US-A-5 750 662, US-A-5 760 194, US-A-5 760 195, US-A-5 779 740, US-A-5 831 040, US-A-5 849 887, US-A-5 936 072 und US-A-5 989 297. Farbstoffe mit mindestens einer Struktureinheit der Formel (5), worin X Chlor oder Brom bedeutet, lassen sich nach allgemein üblichen Methoden aus den entsprechenden α,β-di-chlor- oder α,β-di-brompropionylamino substituierten Farbstoffen herstellen, beispielsweise durch Eliminierung von HCI oder HBr in alkalischem Medium.

Gegenstand der vorliegenden Erfindung sind weiterhin Tinten, z.B. wässrige Tinten, enthaltend einen Monoazo-, Polyazo-, Metallkomplexazo-, Stilben-, Anthrachinon-, Phthalocyanin-, Formazan- oder Dioxazin-Farbstoff, der mindestens eine Struktureinheit der Formel (1) aufweist, wobei für X und Z die oben angegebenen Bedeutungen und Bevorzugungen gelten.

Die in den Tinten verwendeten Farbstoffe sollten vorzugsweise salzarm sein, d.h. einen Gesamtgehalt an Salzen von weniger als 0,5 Gew.-%, bezogen auf das Gewicht der Farbstoffe, enthalten. Farbstoffe, die, bedingt durch ihre Herstellung und/oder die nachträgliche Zugabe von Coupagemitteln grössere Salzgehalte aufweisen, können z.B. durch Membrantrennverfahren, wie Ultrafiltration, Umkehrosmose oder Dialyse, entsalzt werden.

Die Tinten enthalten bevorzugt einen Gesamtgehalt an Farbstoffen von 1 bis 35 Gew.-%, insbesondere 1 bis 30 Gew.-% und vorzugsweise 1 bis 20 Gew.-%, bezogen auf das Gesamtgewicht der Tinte. Als untere Grenze ist hierbei eine Grenze von 1,5 Gew.-%, vorzugsweise 2 Gew.-% und insbesondere 3 Gew.-%, bevorzugt.

Die Tinten können organische Lösungsmittel, z.B. mit Wasser mischbare organische Lösungsmittel, enthalten, beispielsweise C₁-C₄-Alkohole, wie z.B. Methanol, Ethanol, n-Propanol, Isopropanol, n-Butanol, sec.-Butanol, tert.-Butanol oder Isobutanol; Amide, wie z.B. Dimethylformamid oder Dimethylacetamid; Ketone oder Ketonalkohole, wie z.B. Aceton, Methylisobutylketon, Diacetonalkohol; Ether wie z.B. Tetrahydrofuran oder Dioxan; Stickstoff enthaltende heterocyclische Verbindungen, wie z.B. N-Methyl-2-pyrrolidon oder 1,3-Dimethyl-2-imidazolidon, Polyalkylenglykole, wie z.B. Polyethylenglykol oder Polypropylenglykol; C₂-C₆-Alkylenglykole und Thioglykole, wie z.B. Ethylenglykol, Propylenglykol, Butylenglykol, 1,5-Pentandiol, Thiodiglykol, Hexylenglykol, Diethylenglykol, Triethylenglykol, Tetraethylenglykol oder Diethylenglykolmonobutylether; weitere Polyole, wie z.B. Glycerin, oder 1,2,6-Hexantriol; und C₁-C₄-Alkylether von mehrwertigen Alkoholen, wie z.B. 2-Methoxyethanol, 1-Methoxypropanol, 2-(2-Methoxyethoxy)ethanol, 2-(2-Ethoxyethoxy)-ethanol, 2-[2-(2-Methoxyethoxy)ethoxy]-ethanol oder 2-[2-(2-Ethoxyethoxy)ethoxy]ethanol; bevorzugt N-Methyl-2-pyrrolidon, Diethylenglykol, Glycerin oder insbesondere 1,2-Propylenglykol, üblicherweise in einer Menge von 2 bis 30 Gew.-%, insbesondere 5 bis 30 Gew.-% und vorzugsweise 10 bis 25 Gew.-%, bezogen auf das Gesamtgewicht der Tinte.

Weiterhin können die Tinten noch Lösungsvermittler, wie z.B. ε-Caprolactam, enthalten.

Die Tinten können, u.a. zwecks Einstellung der Viskosität, Verdickungsmittel natürlicher oder synthetischer Herkunft enthalten.

Als Beispiele für Verdickungsmittel seien handelsübliche Alginatverdickungen, Stärkeether oder Johannisbrotkernmehlether, insbesondere Natriumalginat für sich allein oder im Gemisch mit modifizierter Cellulose, wie z.B. Methyl-, Ethyl-, Carboxymethyl-, Hydroxyethyl-, Methylhydroxyethyl-, Hydroxypropyl- oder Hydroxypropylmethylcellulose, insbesondere mit vorzugsweise 20 bis 25 Gewichtsprozent Carboxymethylcellulose, genannt. Als synthetische Verdickungsmittel seien ferner z.B. solche auf Basis von Poly(meth)acrylsäuren oder Poly(meth)acrylamiden genannt.

Die Tinten enthalten solche Verdickungsmittel z.B. in einer Menge von 0,01 bis 2 Gew.-%, insbesondere 0,01 bis 1 Gew.-% und vorzugsweise 0,01 bis 0,5 Gew.-%, bezogen auf das Gesamtgewicht der Tinte.

Ferner können die Tinten Puffersubstanzen enthalten, wie z.B. Borax, Borat, Phosphat, Polyphosphat oder Citrat. Als Beispiele seien Borax, Natriumborat, Natriumtetraborat, Natriumdihydrogenphosphat, Dinatriumhydrogenphosphat, Natriumtripolyphosphat, Natriumpentapolyphosphat sowie Natriumcitrat genannt. Sie werden insbesondere in Mengen von 0,1 bis 3 Gew.-%, vorzugsweise 0,1 bis 1 Gew.-%, bezogen auf das Gesamtgewicht der Tinte, verwendet, um einen pH-Wert von z.B. 4 bis 9, insbesondere 5 bis 8,5, einzustellen.

Als weitere Zusätze können die Tinten Tenside oder Feuchthaltemittel enthalten.

Als Tenside kommen die handelsüblichen anionischen oder nichtionogenen Tenside in Betracht. Als Feuchthaltemittel kommen z.B. Harnstoff oder eine Mischung von Na-Lactat (vorteilhafterweise in Form einer 50 bis 60%-igen wässrigen Lösung) und Glycerin und/oder Propylenglykol in Mengen von vorzugsweise 0,1 bis 30 Gew.-%, insbesondere 2 bis 30 Gew.-%, in den erfindungsgemässen Tinten in Betracht.

Bevorzugt sind Tinten, welche eine Viskosität von 1 bis 40 mPa·s, insbesondere 1 bis 20 mPa·s und vorzugsweise 1 bis 10 mPa·s aufweisen.

Weiterhin können die Tinten noch übliche Zusätze, wie z.B. schaumdämpfende Mittel oder insbesondere das Pilz- und/oder Bakterienwachstum hemmende Stoffe, enthalten. Diese werden üblicherweise in Mengen von 0,01 bis 1 Gew.-%, bezogen auf das Gesamtgewicht der Tinte, verwendet.

Die Tinten können in üblicher Weise durch Mischen der einzelnen Bestandteile, z.B. in der gewünschten Menge Wasser, hergestellt werden.

Die erfindungsgemässen Tinten sind insbesondere für die Verwendung in Aufzeichnungssystemen solcher Art geeignet, bei welchen eine Tinte aus einer kleinen Öffnung in Form von Tröpfchen ausgepresst wird, welche gegen ein Substrat gerichtet werden, auf welchem ein Bild entsteht. Geeignete Substrate sind z.B. textile Fasermaterialien, Papier, Kunststoff oder Aluminium-Folien. Geeignete Aufzeichnungssysteme sind z.B. handelsübliche Tintenstrahldrucker für die Anwendung im Papier- oder Textildruck, oder Schreibgeräte wie Füllfederhalter oder Kugelschreiber und insbesondere Tintenstrahldrucker.

Je nach Art der Verwendung ist es gegebenenfalls erforderlich z.B. die Viskosität oder andere physikalische Eigenschaften der Tinte, insbesondere solche, die einen Einfluss auf die Affinität zum jeweiligen Substrat haben, entsprechend anzupassen. Für das Bedrucken von textilen Fasermaterialien, Papier oder Kunststoff-Folien werden vorzugsweise wässrige Tinten verwendet.

Als textile Fasermaterialien kommen insbesondere stickstoffhaltige oder hydroxygruppenhaltige Fasermaterialien, wie z.B. textile Fasermaterialien aus Cellulose, Seide, Wolle oder synthetischen Polyamiden, in Betracht.

Als Beispiele für Papier, das mit den erfindungsgemässen Tinten bedruckt werden kann seien handelsübliches Ink-Jet Papier, Photopapier, Glanzpapier, mit Kunststoff beschichtetes Papier, wie z.B. Epson Ink-Jet Paper, Epson Photo Paper, Epson Glossy Paper, Epson Glossy Film, HP Special Ink-Jet Paper, Encad Photo Gloss Paper, llford Photo Paper genannt. Kunststoff-Folien, die mit den erfindungsgemässen Tinten bedruckt werden können sind beispielsweise transparent oder milchig/undurchsichtig. Geeignete Kunststoff-Folien sind z.B. 3M Transparency-Film.

Beispiele für Aluminium-Folien sind oberflächenbehandelte Folien, z.B. vinyl-lackierte Aluminium-Folien.

Gegenstand der vorliegenden Erfindung ist somit auch ein Verfahren zum Bedrucken von textilen Fasermaterialien, Papier, Kunststoff oder Aluminium-Folien, insbesondere nach dem Tintenstrahldruck-Verfahren, dadurch gekennzeichnet, dass man eine Tinte verwendet, enthaltend einen Farbstoff, der mindestens eine Struktureinheit der Formel (1) enthält, wobei für X und Z die oben angegebenen Bedeutungen und Bevorzugungen gelten.

Bevorzugt sind Tintenstrahldruck-Verfahren zum Bedrucken von textilen Fasermaterialien, Papier oder Kunststoff-Folien, worin man eine wässrige Tinte verwendet.

Im Falle des Tintenstrahldruck-Verfahrens werden einzelne Tropfen der Tinte kontrolliert aus einer Düse auf ein Substrat gespritzt. Ueberwiegend werden hierzu die kontinuierliche Ink-Jet-Methode sowie die Drop on demand-Methode verwendet. Im Falle der kontinuierlichen Ink-Jet-Methode werden die Tropfen kontinuierlich erzeugt, wobei nicht für den Druck benötigte Tropfen in einen Auffangbehälter abgeleitet und rezykliert werden. Im Falle der Drop on demand-Methode hingegen werden Tropfen nach Wunsch erzeugt und gedruckt; d.h. es werden nur dann Tropfen erzeugt, wenn dies für den Druck erforderlich ist. Die Erzeugung der Tropfen kann z.B. mittels eines Piezo-Inkjet-Kopfes oder mittels thermischer Energie (Bubble Jet) erfolgen. Bevorzugt ist für das erfindungsgemässe Verfahren der Druck mittels eines Piezo-Inkjet-Kopfes. Bevorzugt ist für das erfindungsgemässe Verfahren ferner der Druck nach der kontinuierlichen Ink-Jet-Methode.

Die hergestellten Aufzeichnungen, wie beispielsweise Drucke, zeichnen sich insbesondere durch gute Lichtechtheiten und eine hohe Farbbrillanz aus.

Die erfindungsgemässen Farbstoffe eignen sich weiterhin zum Färben und Bedrucken von hydroxylgruppenhaltigen und stickstoffhaltigen Fasermaterialien, Papier und Aluminium-Blechen oder Aluminium-Folien nach an sich bekannten Methoden, wie beispielsweise Tauchverfahren, Rouleau- oder Filmdruck.

Beispiele für Fasermaterialien sind Seide, Wolle, synthetische Polyamidfasern und Polyurethane sowie cellulosehaltige Fasermaterialien aller Art. Cellulosehaltige Fasermaterialien sind beispielsweise die natürliche Cellulosefaser, wie Baumwolle, Leinen und Hanf, sowie Zellstoff und regenerierte Cellulose. Die erfindungsgemässen Farbstoffe sind auch zum Färben oder Bedrucken von hydroxylgruppenhaltigen Fasem geeignet, die in Mischgeweben enthalten sind, z.B. von Gemischen aus Baumwolle mit Polyesterfasern oder Polyamidfasern. Das oben genannte Textilmaterial kann in den verschiedensten Verarbeitungsformen vorliegen, wie z.B. als Faser, Garn, Gewebe oder Gewirke.

Beispiele für Aluminium-Bleche oder Folien sind oberflächenbehandelte Bleche oder Folien, z.B. vinyl-lackierte Aluminium-Bleche oder Folien.

Einen weiteren Gegenstand der vorliegenden Erfindung stellt somit die Verwendung der erfindungsgemässen Farbstoffe zum Färben oder Bedrucken von textilen Fasermaterialien, insbesondere hydroxylgruppenhaltigen oder stickstoffhaltigen Fasermaterialien, Papier, Aluminium-Blechen oder Aluminium-Folien dar.

Die erfindungsgemässen Farbstoffe können in allgemein üblicher, gegebenenfalls zuvor aufbereiteter Form zum Färben oder Bedrucken verwendet werden, beispielsweise in Form von wässrigen Farbstofflösungen für das Ausziehverfahren oder in Form von Druckpasten für die Verwendung im Schablonendruck.

Man erhält Färbungen und Drucke mit guten Allgemeinechtheiten, insbesondere guter Reib-, Nass-, Nassreib- und Lichtechtheit und hoher Farbbrillanz.

Die nachfolgenden Beispiele dienen zur Erläuterung der Erfindung. Die Temperaturen sind in Celsiusgraden angegeben, Teile sind Gewichtsteile, die Prozentangaben beziehen sich auf Gewichtsprozente, sofern nicht anders vermerkt. Gewichtsteile stehen zu Volumenteilen im Verhältnis von Kilogramm zu Liter.

### Beispiel 1:

11,8 Teile des Farbstoffs der Formel 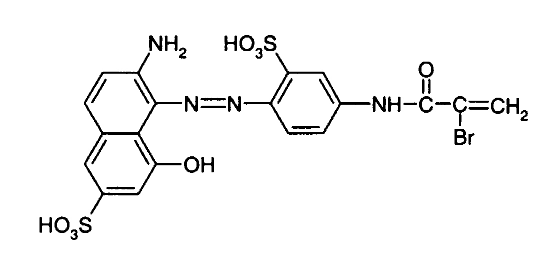 und 27,4 Teile Asparaginsäure werden in 400 Teilen Wasser gelöst. Zu dieser Lösung tropft man bei Raumtemperatur eine 30%ige Natriumhydroxidlösung und stellt den pH der Reaktionsmischung langsam auf 10. Zur Vervollständigung der Reaktion wird einige Stunden unter diesen Bedingungen gerührt (Kontrolle durch Dünnschichtchromatographie). Anschliessend wird die Reaktionsmischung mit einer 4 N HCI auf pH 7,5 bis 8 gestellt, klärfiltriert, dialytisch vom Salz befreit und gefriergetrocknet. Man erhält 14,5 Teile eines Farbstoffs, der in Form der freien Säure der Formel (101) 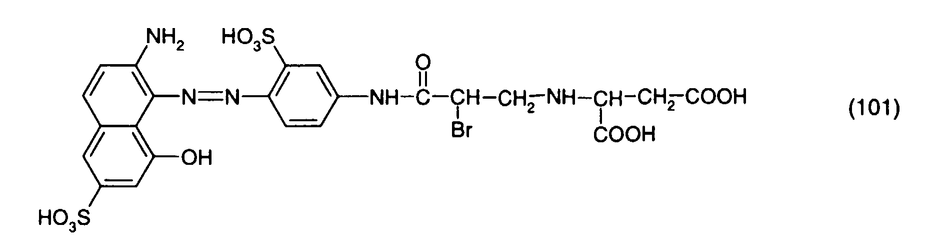 entspricht und Drucke sowie Färbungen auf Baumwolle, Wolle, Seide und Papier in rotem Farbton mit guter Lichtechtheit und hoher Farbbrillanz ergibt.

### Beispiele 2 bis 46:

Analog zu der in Beispiel 1 beschriebenen Vorgehensweise lassen sich die Farbstoffe der allgemeinen Formel 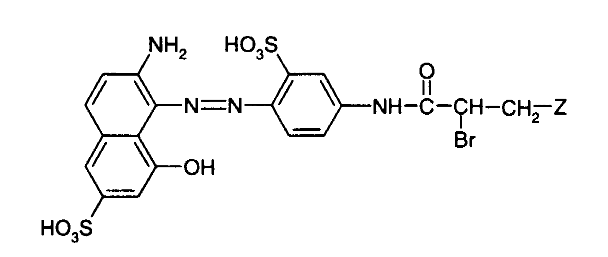 herstellen, worin Z die in Tabelle 1 genannten Bedeutungen hat, wenn man anstelle von Asparaginsäure eine Verbindung der Formel Z-H verwendet.

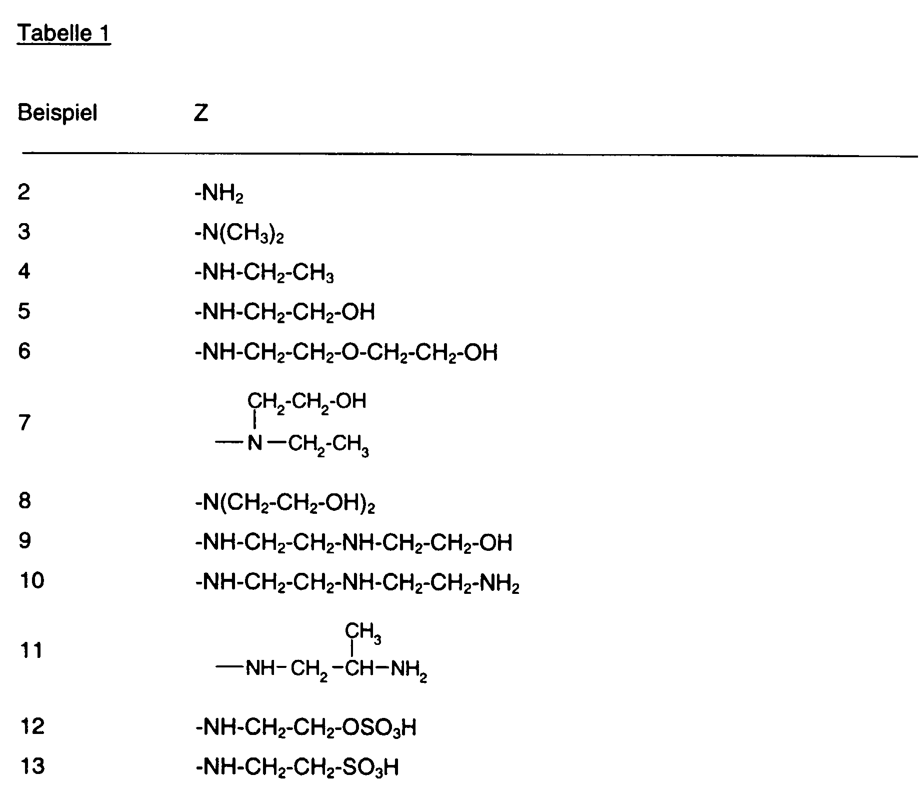

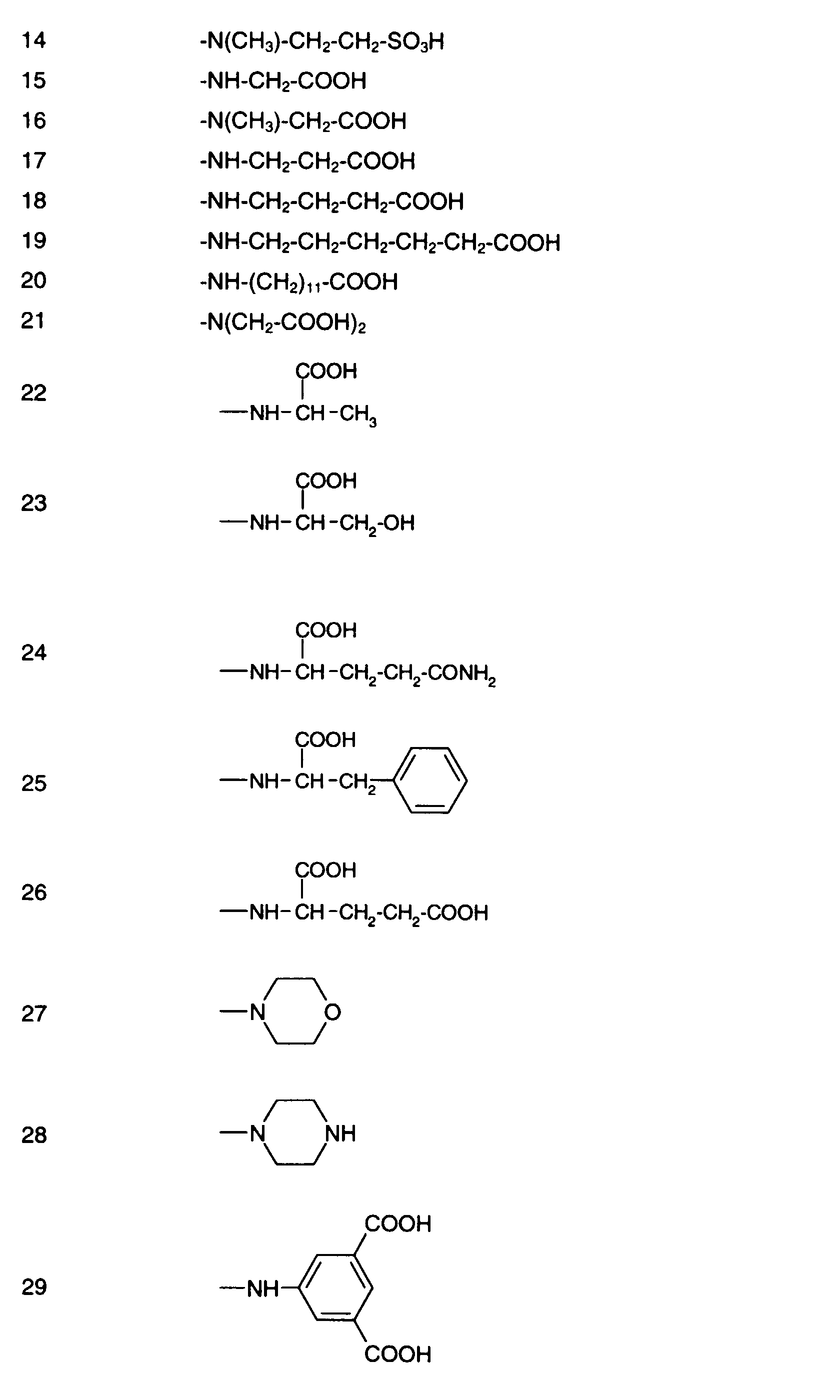

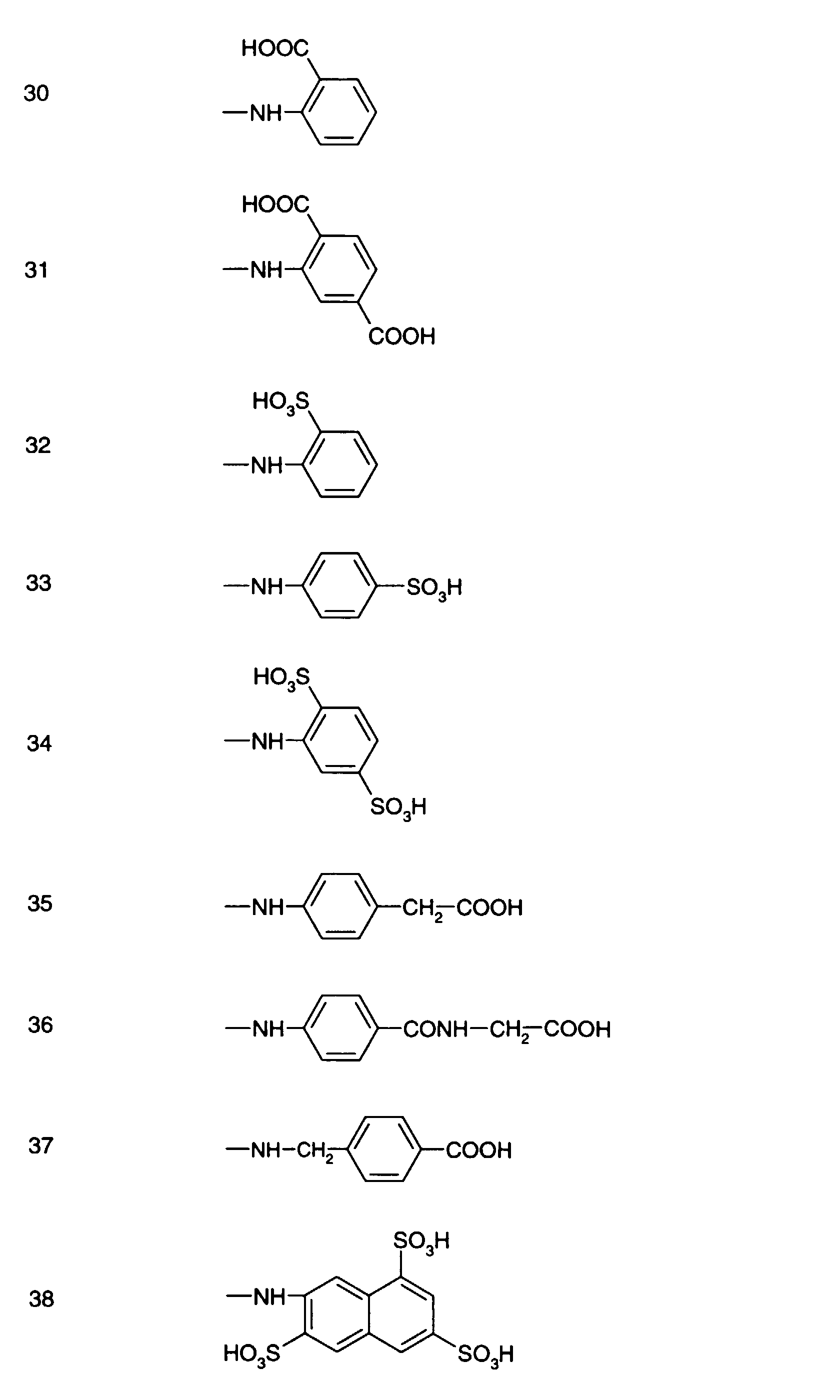

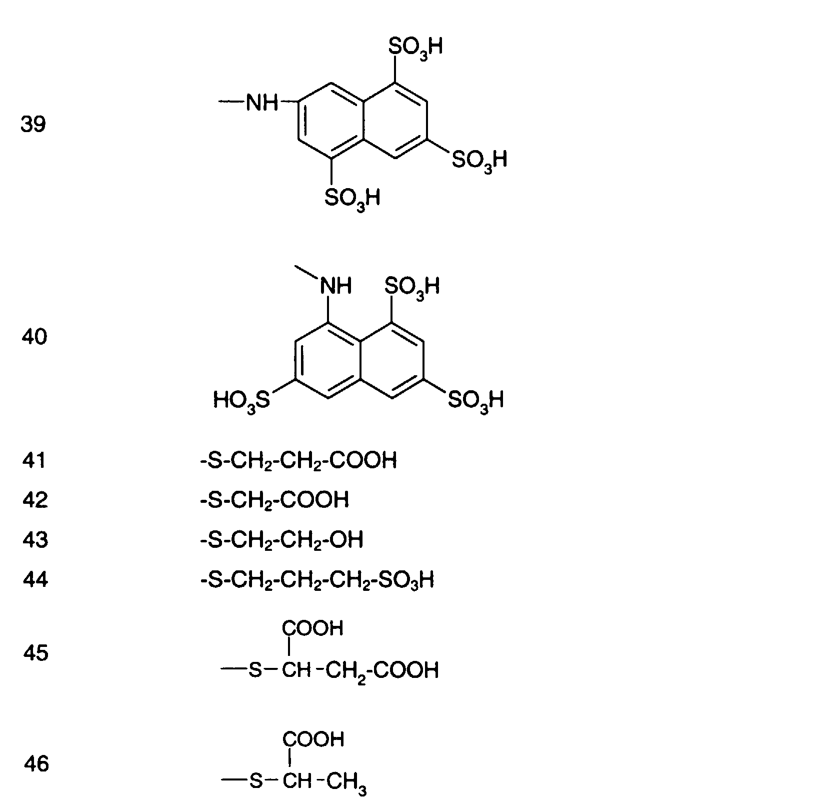

Die Farbstoffe ergeben Drucke sowie Färbungen auf Baumwolle, Wolle, Seide und Papier in rotem Farbton mit guter Lichtechtheit und hoher Farbbrillanz.

### Beispiele 47 bis 50:

Analog der in Beispiel 1 beschriebenen Vorgehensweise lassen sich die Farbstoffe der Formeln (102), (103), (104) und (105)

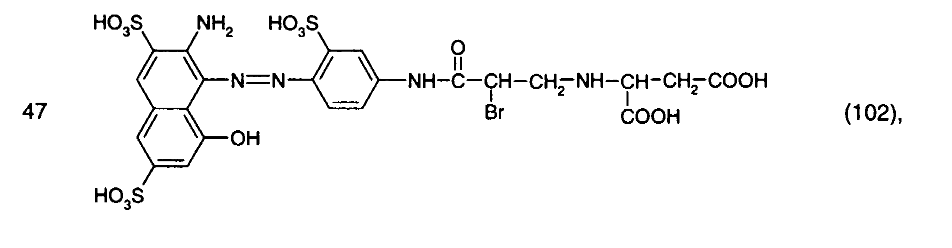

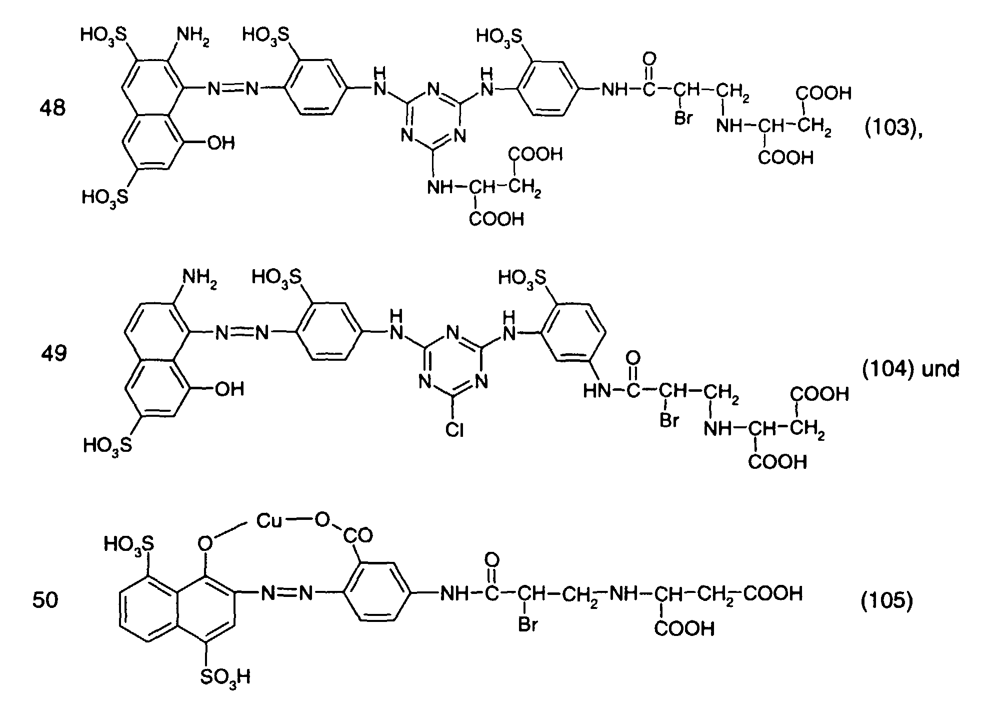

herstellen. Die Farbstoffe ergeben Drucke sowie Färbungen auf Baumwolle, Wolle, Seide und Papier in rotem Farbton mit guter Lichtechtheit und hoher Farbbrillanz.

### Beispiel 51:

13,1 Teile des Farbstoffs der Formel 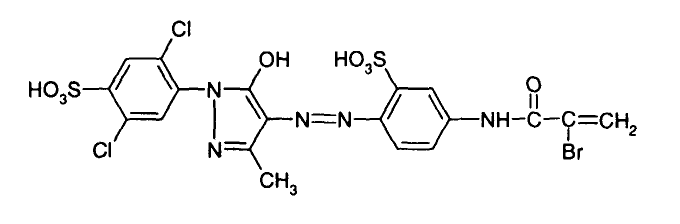 werden in 250 Teilen Wasser bei Raumtemperatur gelöst und langsam mit einer neutralen Lösung von 26,6 Teilen Asparaginsäure in 50 Teilen Wasser versetzt. Zu der erhaltenen Lösung tropft man bei Raumtemperatur eine 30%ige Natriumhydroxidlösung und stellt den pH der Reaktionsmischung langsam auf 10. Zur Vervollständigung der Reaktion wird einige Stunden unter diesen Bedingungen gerührt (Kontrolle durch Dünnschichtchromatographie). Anschliessend wird die Reaktionsmischung mit einer 4 N HCI auf pH 7 gestellt, klärfiltriert, dialytisch vom Salz befreit und gefriergetrocknet. Man erhält 11,6 Teile eines Farbstoffs, der in Form der freien Säure der Formel (106) 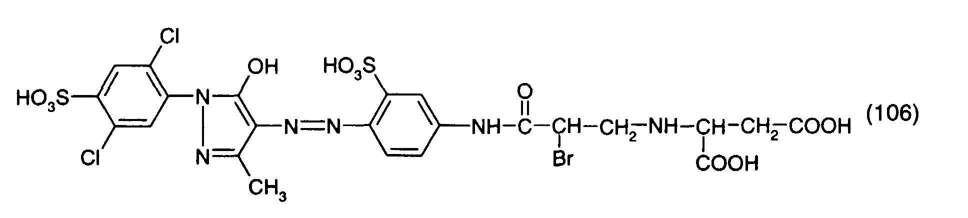 entspricht und Drucke sowie Färbungen auf Baumwolle, Wolle, Seide und Papier in gelbem Farbton mit guter Lichtechtheit und hoher Farbbrillanz ergibt.

### Beispiele 52 bis 57:

Analog zu der in Beispiel 51 beschriebenen Vorgehensweise lassen sich die Farbstoffe der allgemeinen Formel 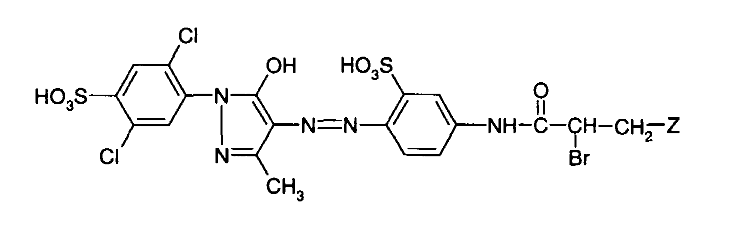 herstellen, worin Z die in Tabelle 2 genannten Bedeutungen hat, wenn man anstelle von Asparaginsäure eine Verbindung der Formel Z-H verwendet.

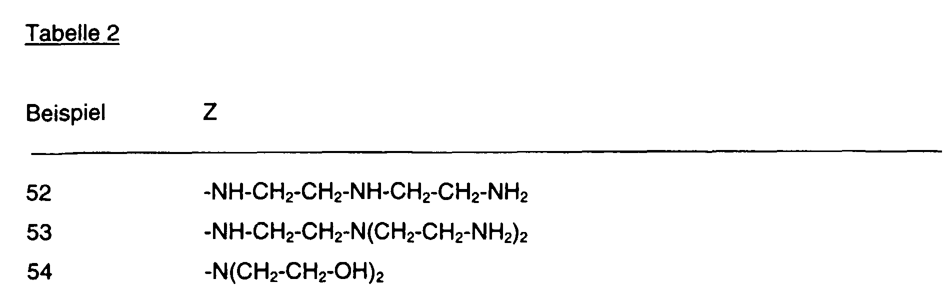

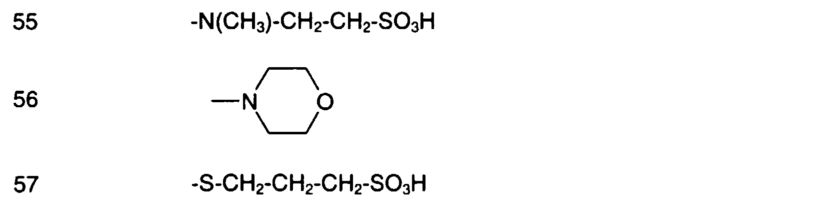

Die Farbstoffe ergeben Drucke sowie Färbungen auf Baumwolle, Wolle, Seide und Papier in gelbem Farbton mit guter Lichtechtheit und hoher Farbbrillanz.

### Beispiele 58 und 59:

Analog der in Beispiel 1 oder 51 beschriebenen Vorgehensweise lassen sich die Farbstoffe der Formeln (107) und (108)

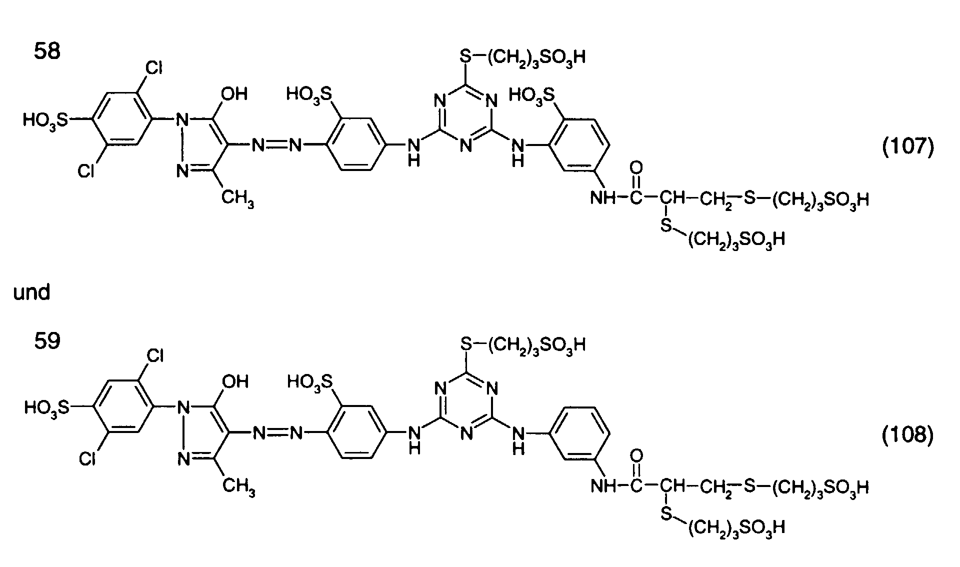

herstellen. Die Farbstoffe ergeben Drucke sowie Färbungen auf Baumwolle, Wolle, Seide und Papier in gelbem Farbton mit guter Lichtechtheit und hoher Farbbrillanz.

### Beispiel 60:

1,0 Teile des Farbstoffs der Formel 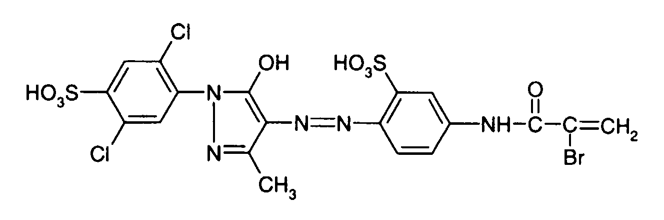 werden in 25 Teilen Wasser bei Raumtemperatur gelöst und mit 0,5 Teilen einer 2 N Natriumhydroxidlösung auf pH 10 gestellt. Zu dieser Lösung tropft man in drei Portionen jeweils 6,0 Teile einer 0,25 molaren Lösung eines Amins der Formel 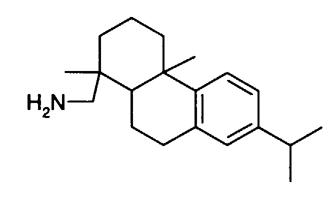 und hält den pH der Reaktionsmischung durch Zugabe einer 1 N Natriumhydroxidlösung bei 10. Zur Vervollständigung der Reaktion wird die Reaktionsmischung einen Tag bei Raumtemperatur gerührt (Kontrolle durch Dünnschichtchromatographie) und anschliessend durch Zugabe einer 1 N Salzsäurelösung auf pH 7 bis 7,5 zurückgestellt. Der entstandene Niederschlag wird filtriert, gründlich mit Wasser gewaschen und im Vakuum bei 40°C getrocknet. Man erhält 2,0 Teile eines Farbstoffs, der in Form der freien Säure der Formel (109) 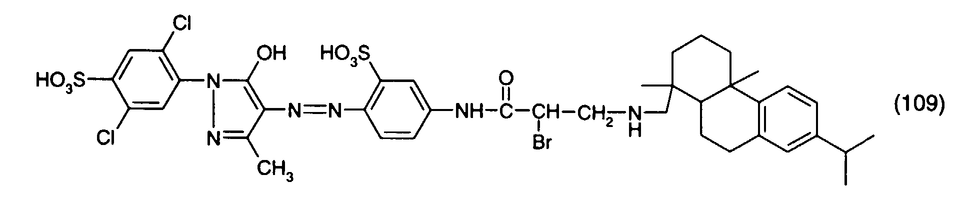 entspricht und Drucke auf Aluminium-Blech oder Aluminium-Folie in zitronengelbem Farbton mit guter Lichtechtheit und hoher Farbbrillanz ergibt.

### Beispiele 61 bis 76:

In Analogie zu der in Beispiel 1 oder 51 beschriebenen Vorgehensweise lassen sich gemäss dem nachfolgenden Schema wertvolle Farbstoffe herstellen, worin A jeweils die in Tabelle 3 angegebene Bedeutung hat und Z ein Rest der Formel 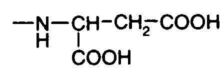 ist. Die Farbstoffe ergeben Drucke sowie Färbungen auf Baumwolle, Wolle, Seide und Papier in den angegebenen Farbtönen mit guter Lichtechtheit und hoher Farbbrillanz. Die mit " * " gekennzeichneten Halogenatome können durch den Rest Z substituiert werden, wobei eine Substitution von den Reaktionsbedingungen abhängt.

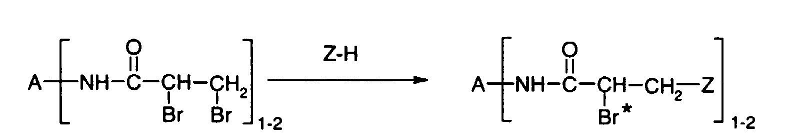

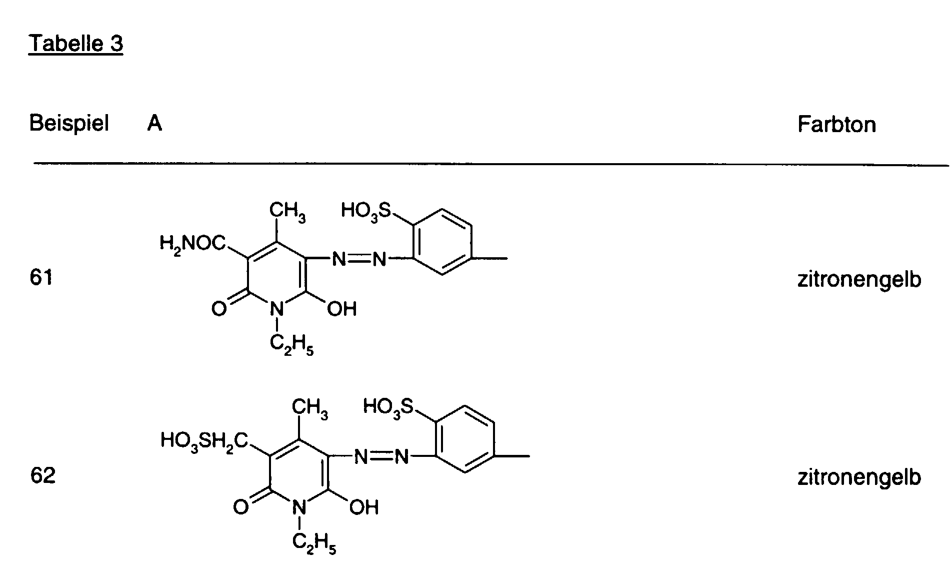

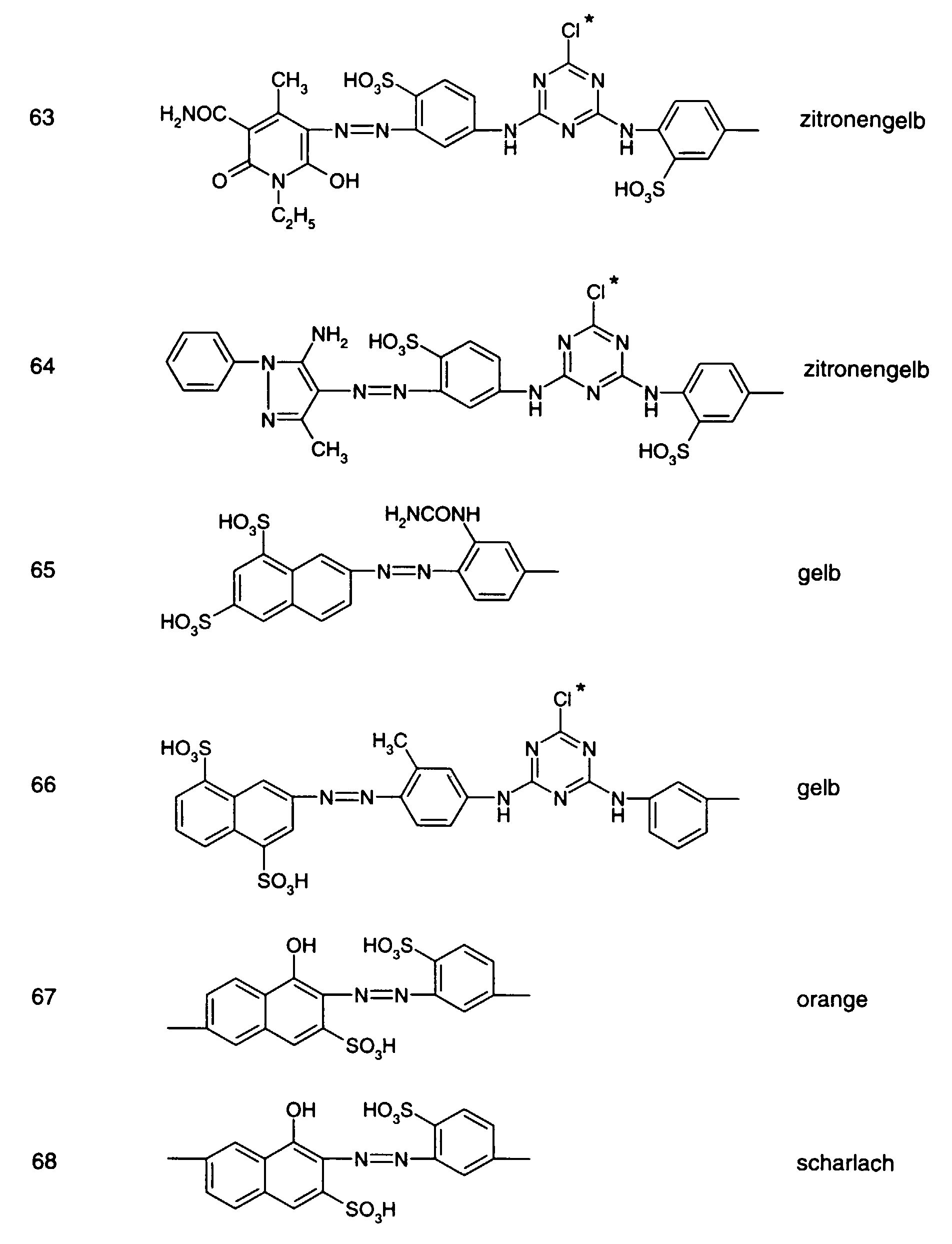

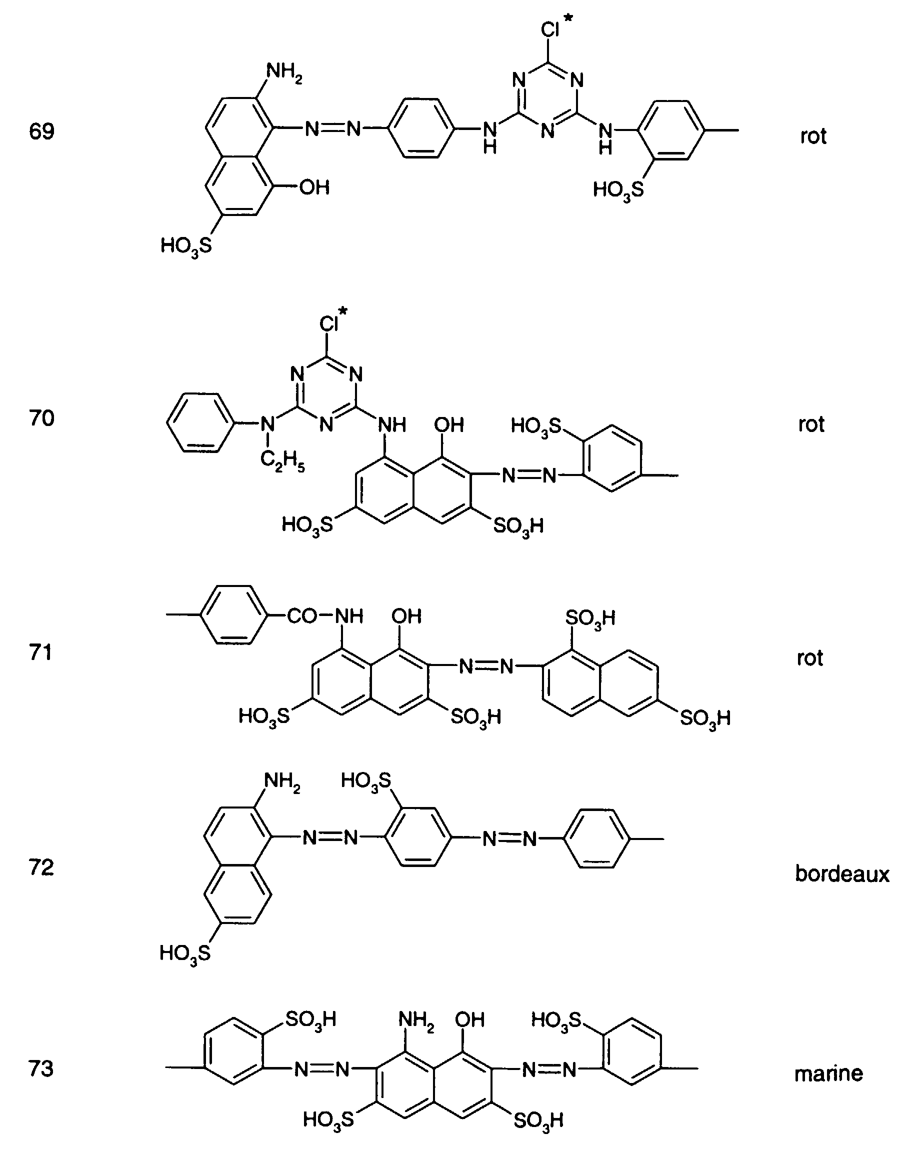

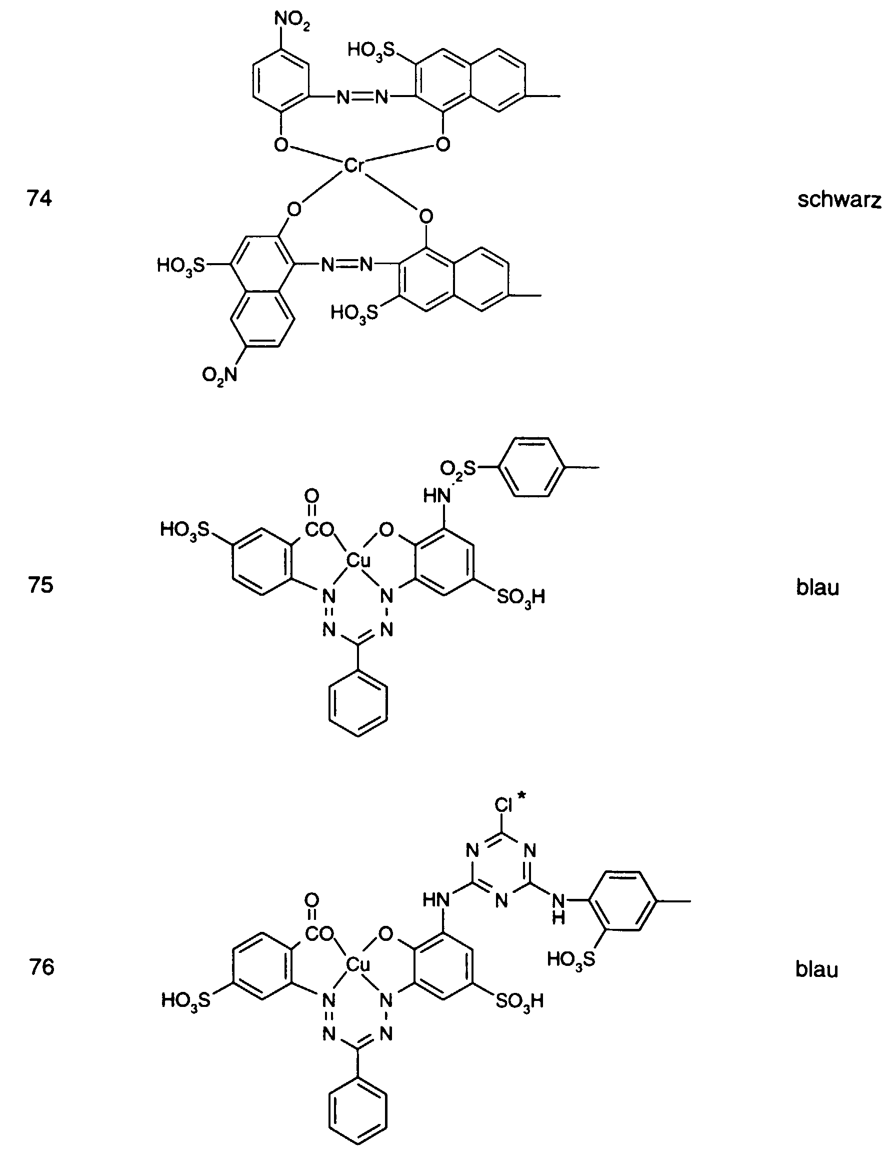

### Beispiele 77 bis 95:

In Analogie zu der in Beispiel 1 oder 51 beschriebenen Vorgehensweise lassen sich gemäss dem nachfolgenden Schema wertvolle Farbstoffe herstellen, worin A jeweils die in Tabelle 4 angegebene Bedeutung hat und Z ein Rest der Formel 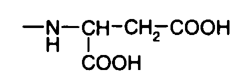 ist. Die Farbstoffe ergeben Drucke sowie Färbungen auf Baumwolle, Wolle, Seide und Papier in den angegebenen Farbtönen mit guter Lichtechtheit und hoher Farbbrillanz. Die mit " * " gekennzeichneten Halogenatome können durch den Rest Z substituiert werden, wobei eine Substitution von den Reaktionsbedingungen abhängt.

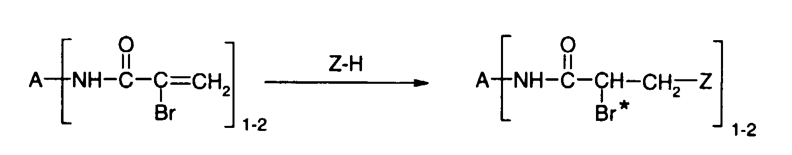

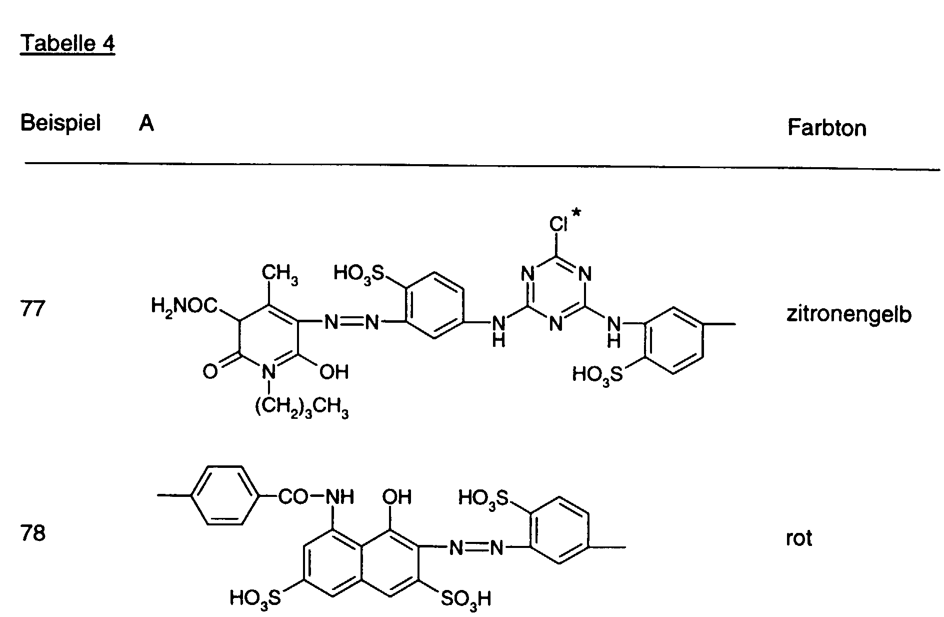

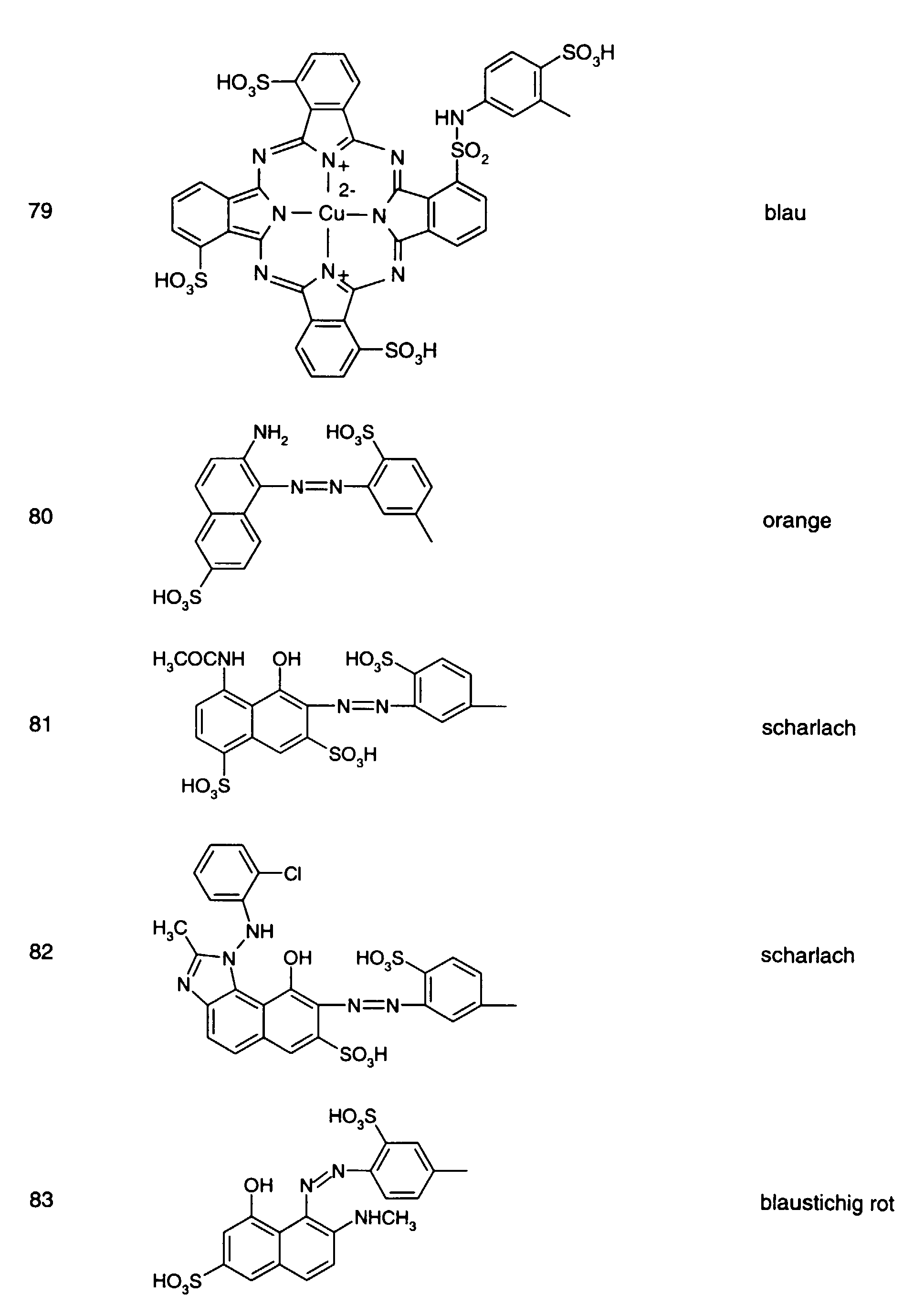

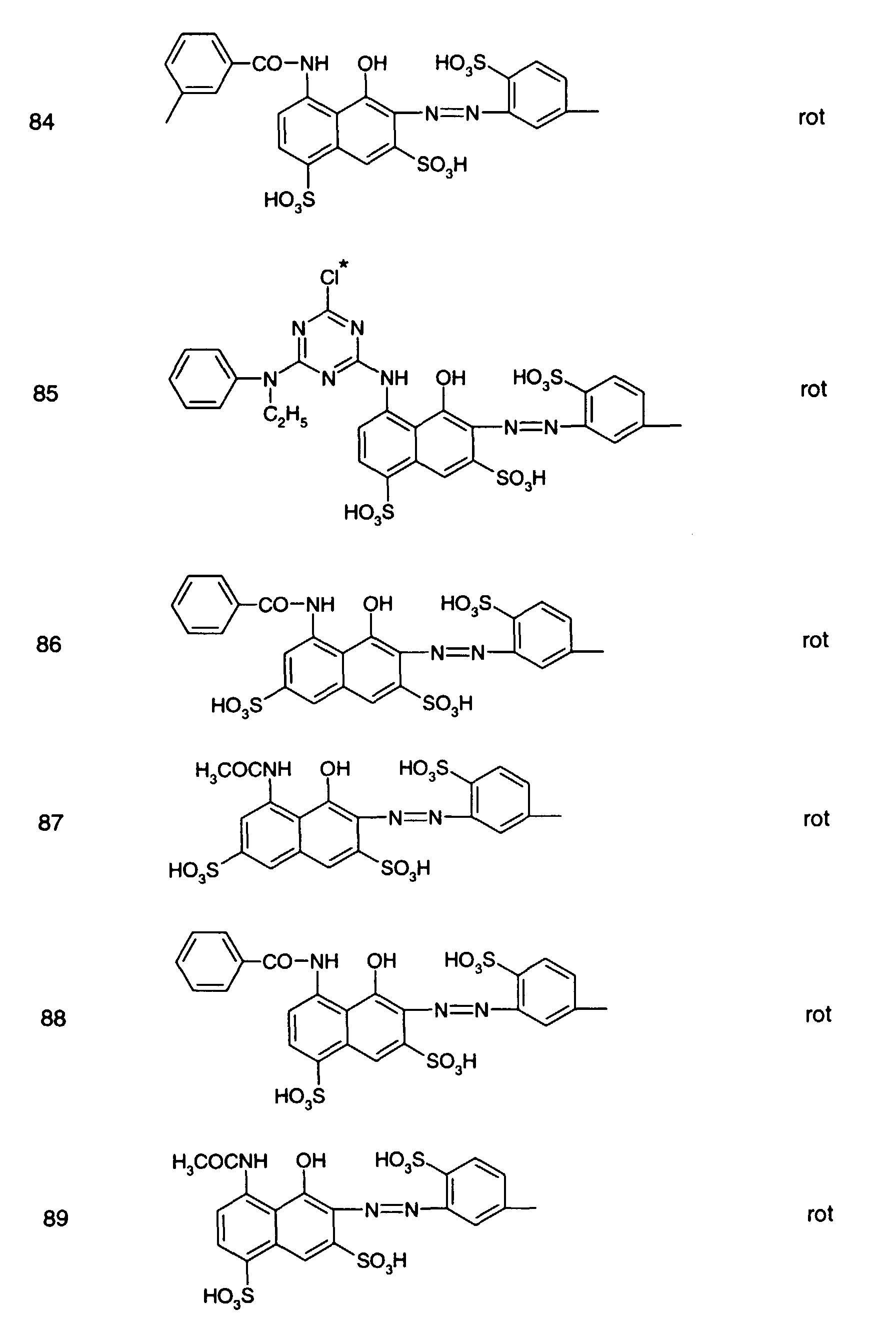

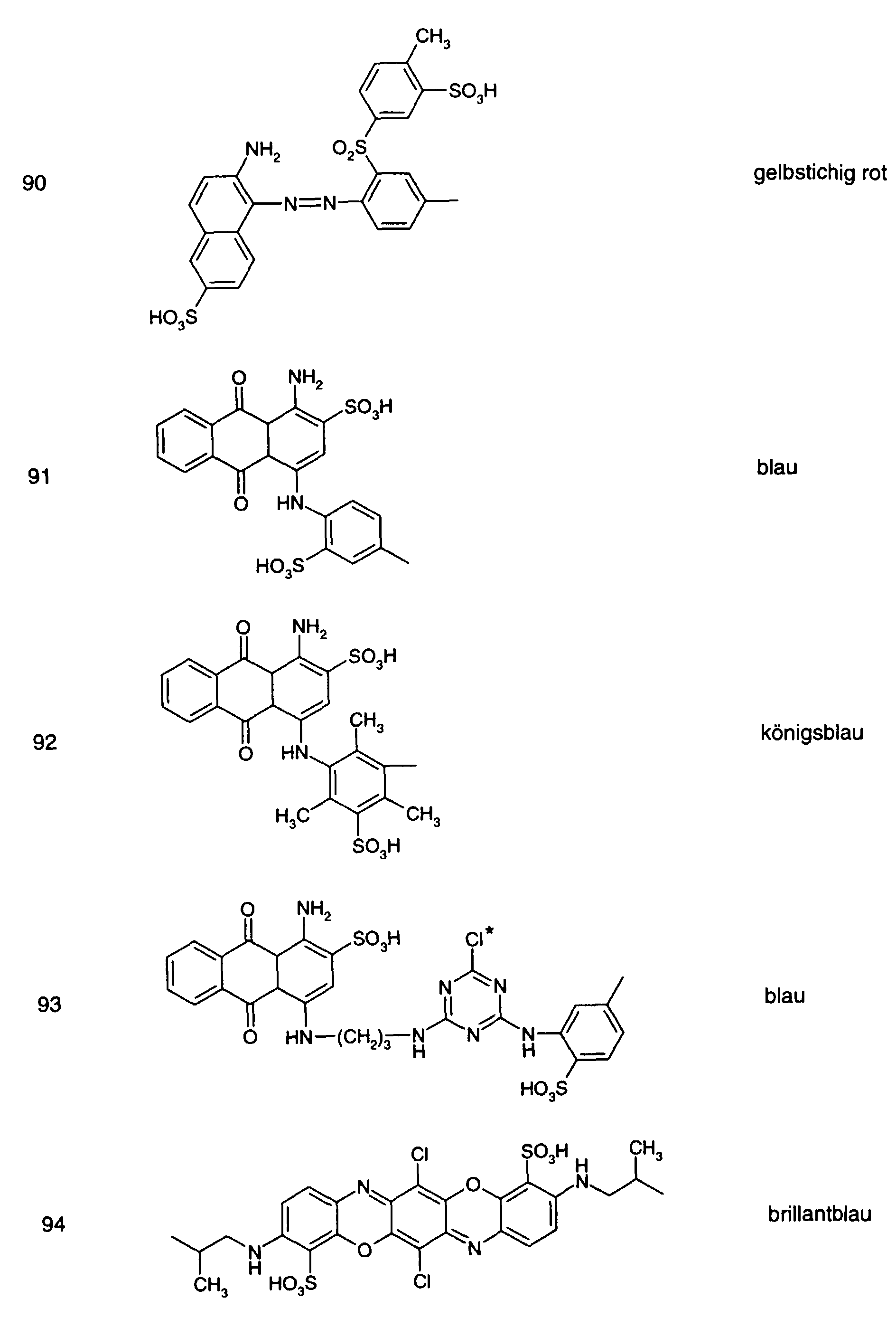

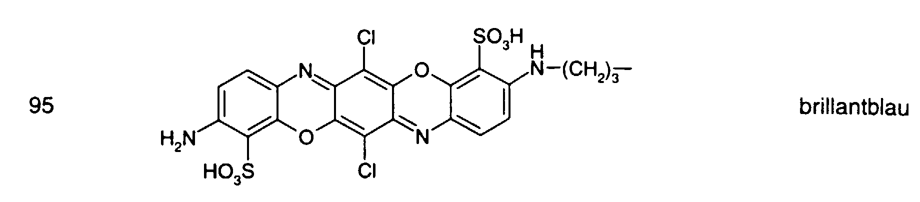

### Beispiel 96:

Der Farbstoff der Formel (110) 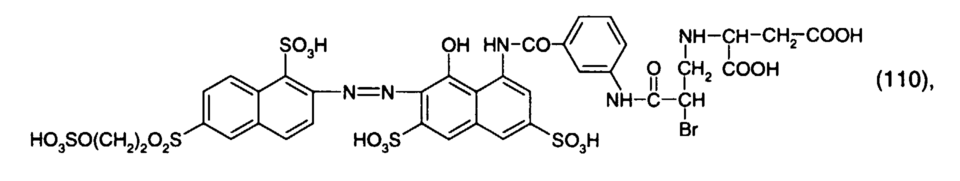 der Drucke sowie Färbungen auf Baumwolle, Wolle, Seide und Papier in rotem Farbton mit guter Lichtechtheit ergibt, lässt sich erhalten, indem man zunächst eine Verbindung der Formel 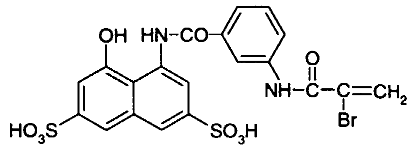 in Analogie zu Beispiel 1 mit Asparaginsäure umsetzt und auf die erhaltene Verbindung ein diazotiertes Amin der Formel 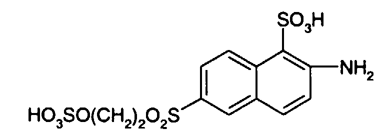 kuppelt. Die erforderlichen Naphthalinsulfonsäure-verbindungen sind bekannt oder können nach an sich bekannten Verfahren hergestellt werden.

### Applikationsbeispiel 1:

2,85 Teile des Farbstoffs gemäss Beispiel 1 werden in 100 Teilen destilliertem Wasser gelöst und filtriert. Die so erhaltene Tinte wird mittels eines Drop-on-Demand Ink-Jet Printers auf ein handelsübliches Ink-Jet Papier oder Photopapier oder einen Glanzfilm (z.B. Epson Glossy Film) aufgedruckt.

### Applikationsbeispiel 2:

a) Ein Seidengewebe wird mit einer wässrigen Flotte, enthaltend 150 g/l eines handelsüblichen Alginatverdickers, 50 g/l Harnstoff und 50 g/l einer wässrigen Ammoniumtartratlösung (25 %-ig), foulardiert (Flottenaufnahme 90%) und getrocknet.
b) Auf das gemäss a) vorbehandelte Seidengewebe wird eine Tinte A, enhaltend
   5 Gew.% des Farbstoffs gemäss Beispiel 1,
   20 Gew.% 1,2-Propylenglykol und
   75 Gew.% Wasser
   mit einem Drop-on-Demand Piezo Inkjet-Kopf aufgedruckt. Der Druck wird getrocknet und bei 102°C im Sattdampf fixiert und anschliessend ausgewaschen.

### Applikationsbeispiel 3:

a) Mercerisiertes Baumwoll-Satin wird mit einer Flotte, enthaltend 30 g/l Natriumcarbonat, foulardiert (Flottenaufnahme 70%) und getrocknet.
b) Auf das gemäss Schritt a) vorbehandelte Baumwoll-Satin wird eine wässrige Tinte mit einer Viskosität von 2 mPa.s, enthaltend
   - 15 Gew.-% des Farbstoffs gemäss Beispiel 1,
   - 15 Gew.-% 1,2-Propylenglykol,
   - 0,5 Gew.-% Borax und
   - 69,5 Gew.-% Wasser
   mit einem Drop-on-Demand Inkjet-Kopf (Bubble Jet) aufgedruckt. Der Druck wird vollständig getrocknet und 4 Minuten bei 102°C im Sattdampf fixiert, kalt gespült, kochend ausgewaschen, nochmals gespült und getrocknet.

### Applikationsbeispiel 4:

a) Eine Drucktinte wird hergestellt aus:
8 Gew.% des Farbstoffs gemäss Beispiel 60,
8 Gew.% Nitrocellulose A 400,
6 Gew.% Keton Resin SK,
1 Gew.% Dibutylphthalat,
20 Gew.% 1-Methoxypropanol,
20 Gew.% Methylisobutylketon und
37 Gew.% Ethanol (abs.), indem man die Lösungsmittel miteinander mischt, dann die Harze und zuletzt den Farbstoff darin löst. Die Drucktinte wird mit einer Schablone auf vinyllackiertes Aluminium-Blech oder Aluminium-Folie gedruckt.

### Applikationsbeispiel 5:

10 Teile Wollstrickgarn werden bei 30°C in ein Färbebad eingerührt, das auf 100 Teile Wasser 0.8 Teile des Farbstoffs gemäss Beispiel 1, 0.5 Teile Natriumsulfat und 2 Teile Natriumacetat enthält und mit Essigsäure (80%) auf einen pH-Wert von 4,5 gestellt ist. Die Flotte wird im Verlauf von 45 Minuten zum Sieden gebracht und während weiteren 45 bis 70 Minuten bei Kochtemperatur gehalten. Daraufhin wird das Färbegut herausgenommen, mit kaltem Wasser gründlich gespült und getrocknet.

### Applikationsbeispiel 6:

3 Teile des gemäss Beispiel 1 erhaltenen Farbstoffs werden unter schnellem Rühren in 100 Teile einer Stammverdickung, enthaltend 50 Teile 5 %-ige Natriumalginatverdickung, 27,8 Teile Wasser, 20 Teile Harnstoff, 1 Teil m-nitrobenzolsulfonsaures Natrium sowie 1,2 Teile Natriumhydrogencarbonat, eingestreut. Mit der so erhaltenen Druckpaste bedruckt man ein Baumwollgewebe, trocknet und dämpft den erhaltenen bedruckten Stoff 2 Minuten bei 102°C in gesättigtem Dampf. Das bedruckte Gewebe wird dann gespült, gegebenenfalls kochend geseift und nochmals gespült, und anschliessend getrocknet.

## Patentansprüche

1. Monoazo-, Polyazo-, Metallkomplexazo-, Stilben-, Anthrachinon-, Phthalocyanin-, Formazan- oder Dioxazin-Farbstoffe, die mindestens eine Struktureinheit der Formel (1) 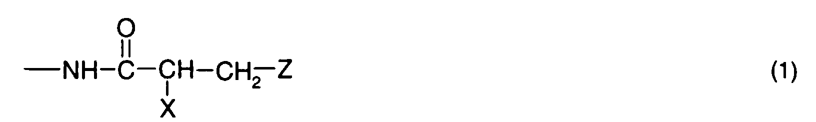 enthalten, worin
Z gegebenenfalls im Alkylteil substituiertes oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes oder durch Sauerstoff oder einen Rest - NR₁- unterbrochenes N-Mono- oder N,N-Di-C₁-C₂₄-Alkylamino, wobei R₁ Wasserstoff oder C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, Piperazin-1-yl oder Piperidin-1-yl ist, und
X Wasserstoff, Hydroxy, Chlor oder Brom bedeutet, oder X die Bedeutung von Z hat.

2. Farbstoffe gemäss Anspruch 1, dadurch gekennzeichnet, dass
Z gegebenenfalls im Alkylteil durch Hydroxy, Sulfo oder Carboxy substituiertes oder durch ein, zwei oder drei Sauerstoffatome unterbrochenes C₁-C₁₂-Alkoxy, gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes oder durch ein, zwei oder drei Sauerstoffatome oder -NH- Gruppen unterbrochenes N-Mono- oder N,N-Di-C₁-C₁₄-Alkylamino, C₂₀-Diterpenamino, gegebenenfalls durch C₁-C₄-Alkyl oder Carboxyl substituiertes C₅-C₇-Cycloalkylamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, Piperazin-1-yl oder Piperidin-1-yl bedeutet.

3. Farbstoffe gemäss Anspruch 1 oder 2, dadurch gekennzeichnet, dass
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy, Carbamoyl, Sulfo oder Sulfamoyl substituiert sein kann, Amino, C₂-C₄-Alkanoylamino, Hydroxy, Sulfo, Sulfato, Carboxy, Carbamoyl oder Sulfamoyl substituiertes oder durch ein, zwei oder drei -NH- Gruppen unterbrochenes N-Mono- oder N,N-Di-C₁-C₁₄-Alkylamino, C₂₀-Diterpenamino, gegebenenfalls durch Carboxymethyl, C₁-C₄-Alkoxy, Carboxy, Carbamoyl, N-C₁-C₄-Alkylcarbamoyl, welches seinerseits im Alkylteil durch Carboxy weitersubstituiert sein kann, Sulfo oder Halogen substituiertes Phenylamino oder N-C₁-C₄-Alkyl-N-phenylamino, im Arylteil durch Sulfo substituiertes Naphthylamino, Morpholino, Piperazin-1-yl oder Piperidin-1-yl bedeutet.

4. Farbstoffe gemäss einem der Ansprüche 1 bis 3, dadurch gekennzeichnet, dass Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet.

5. Farbstoffe gemäss einem der Ansprüche 1 bis 4, dadurch gekennzeichnet, dass X Brom bedeutet.

6. Farbstoffe gemäss einem der Ansprüche 1 bis 5, dadurch gekennzeichnet, dass sie der Formel (2) 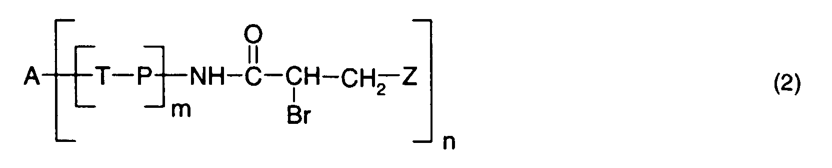 entsprechen, worin
A der Rest eines Monoazo-, Polyazo-, Metallkomplexazo-, Anthrachinon-, Phthalocyanin-, Formazan- oder Dioxazin-Chromophors bedeutet,
T ein Rest der Formel 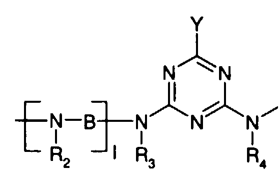 ist und
B ein verzweigter oder geradkettiger C₂-C₁₂-Alkylenrest, welcher durch 1, 2 oder 3 Glieder -O- unterbrochen sein kann und unsubstituiert oder durch Hydroxy, Sulfo, Sulfato, Cyano oder Carboxy substituiert ist, oder
ein gegebenenfalls durch C₁-C₄-Alkyl, C₁-C₄-Alkoxy, C₂-C₄-Alkanoylamino, Sulfo, Halogen oder Carboxy substituierter Phenylenrest ist,
R₂, R₃ und R₄ unabhängig voneinander Wasserstoff oder gegebenenfalls substituiertes C₁-C₄-Alkyl bedeuten,
Y Halogen, Hydroxy oder die in Anspruch 1 für Z angegebene Bedeutung hat und l die Zahl 0 oder 1 ist,
P ein gegebenenfalls durch C₁-C₄-Alkyl, C₁-C₄-Alkoxy, C₂-C₄-Alkanoylamino, Sulfo, Halogen oder Carboxy substituierter Phenylenrest ist,
Z die in Anspruch 1 angegebene Bedeutung hat,
m die Zahl 0 oder 1 ist und
n die Zahl 1 oder 2 bedeutet.

7. Farbstoffe gemäss Anspruch 6, dadurch gekennzeichnet, dass
A der Rest eines Monoazo-, Polyazo- oder Metallkomplexazo-Chromophors bedeutet.

8. Farbstoffe gemäss Anspruch 6 oder 7, dadurch gekennzeichnet, dass
n die Zahl 1 bedeutet.

9. Farbstoffe gemäss einem der Ansprüche 6 bis 8, dadurch gekennzeichnet, dass
A ein Rest der Formel (3) oder (4) 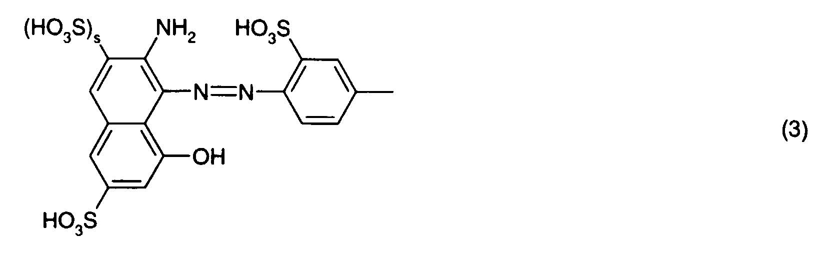 oder 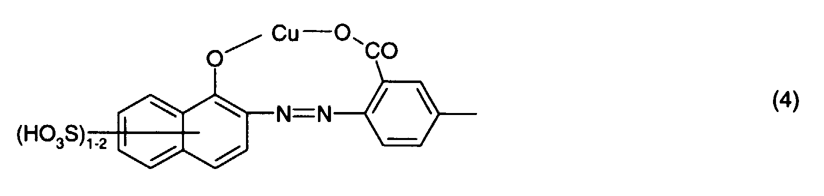 bedeutet, worin
s die Zahl 0 oder 1 ist,
Z gegebenenfalls im Alkylteil durch Hydroxy, Sulfo oder Carboxy substituiertes C₁-C₄-Alkylthio, gegebenenfalls im Alkylteil durch Phenyl, welches seinerseits durch Carboxy substituiert sein kann, Amino, Hydroxy, Sulfo, Sulfato, Carboxy oder Carbamoyl substituiertes oder durch ein oder zwei -NH- Gruppen unterbrochenes N-Mono-C₁-C₆-Alkylamino, gegebenenfalls im Alkylteil durch Amino, Hydroxy, Sulfo, Sulfato, Carboxy oder Carbamoyl substituiertes N,N-Di-C₁-C₆-Alkylamino, Morpholino oder Piperazin-1-yl bedeutet,
P ein gegebenenfalls durch Sulfo substituierter Phenylenrest ist,
m für die Zahl 0 oder 1 steht,
n die Zahl 1 bedeutet,
T den in Anspruch 6 angegebenen Rest bedeutet, worin
R₃ und R₄ Wasserstoff sind,
Y Halogen, Hydroxy oder die oben für Z angegebene Bedeutung hat, und
l die Zahl 0 ist.

10. Verfahren zur Herstellung von Farbstoffen gemäss Anspruch 1, dadurch gekennzeichnet, dass man
einen Monoazo-, Polyazo-, Metallkomplexazo-, Anthrachinon-, Phthalocyanin-, Formazan- oder Dioxazin-Farbstoff enthaltend mindestens eine Struktureinheit der Formel (5) 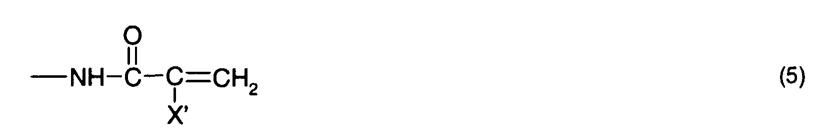 oder mindestens eine der Struktureinheit der Formel (5) entsprechenden Vorstufe mit einer Verbindung der Formel (6)
Z-H (6)
in mindestens einer den Struktureinheiten der Formel (5) oder deren Vorstufe im Farbstoffmolekül äquimolaren Menge umsetzt, wobei X' Wasserstoff, Chlor oder Brom ist und für Z die in Anspruch 1 angegebene Bedeutung gilt.

11. Tinten, dadurch gekennzeichnet, dass sie
einen Monoazo-, Polyazo-, Metallkomplexazo-, Stilben-, Anthrachinon-, Phthalocyanin-, Formazan- oder Dioxazin-Farbstoff enthalten, der mindestens eine Struktureinheit der Formel (1) 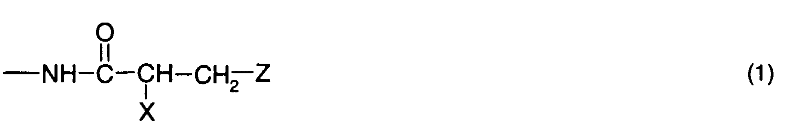 aufweist, worin
Z gegebenenfalls im Alkylteil substituiertes oder durch Sauerstoff unterbrochenes C₁-C₂₄-Alkoxy, gegebenenfalls im Phenylring substituiertes Phenoxy, gegebenenfalls im Alkylteil substituiertes C₁-C₄-Alkylthio, gegebenenfalls im Phenylring substituiertes Phenylthio, Amino, gegebenenfalls im Alkylteil substituiertes oder durch Sauerstoff oder einen Rest -NR₁- unterbrochenes N-Mono- oder N,N-Di-C₁-C₂₄-Alkylamino, wobei R₁ Wasserstoff oder C₁-C₄-Alkyl bedeutet, C₁₀-C₂₀-Terpenamino, gegebenenfalls im Cycloalkylring substituiertes C₅-C₇-Cycloalkylamino, gegebenenfalls im Arylteil substituiertes Phenyl- oder Naphthylamino oder N-C₁-C₄-Alkyl-N-phenyl- oder N-C₁-C₄-Alkyl-N-naphthylamino, Morpholino, Piperazin-1-yl oder Piperidin-1-yl ist, und
X Wasserstoff, Hydroxy, Chlor oder Brom bedeutet, oder X die Bedeutung von Z hat.

12. Verfahren zum Bedrucken von textilen Fasermaterialien, Papier, Kunststoff- oder Aluminium-Folien nach dem Tintenstrahldruck-Verfahren, dadurch gekennzeichnet, dass man eine Tinte gemäss Anspruch 11 verwendet.

13. Verwendung von Farbstoffen gemäss einem der Ansprüche 1 bis 9 bzw. der gemäss Anspruch 10 erhaltenen Farbstoffe zum Färben oder Bedrucken von textilen Fasermaterialien, Papier, Aluminium-Blechen oder Aluminium-Folien.
